(19) **Europäisches Patentamt European Patent Office Office européen des brevets**

(11) **EP 1 716 679 B1**

(12) **EUROPEAN PATENT SPECIFICATION**

(45) Date of publication and mention of the grant of the patent:
**09.07.2008 Bulletin 2008/28**

(21) Application number: **04712528.1**

(22) Date of filing: **19.02.2004**

(51) Int Cl.:
**H04L 25/02** (2006.01)   **H04L 1/06** (2006.01)
**H04B 7/06** (2006.01)

(86) International application number:
**PCT/EP2004/001632**

(87) International publication number:
**WO 2005/081480 (01.09.2005 Gazette 2005/35)**

(54) **APPARATUS AND METHOD FOR ESTIMATING AN EFFECTIVE CHANNEL AND APPARATUS AND METHOD FOR PROVIDING PILOT SEQUENCES**

VORRICHTUNG UND VERFAHREN ZUR SCHÄTZUNG EINES EFFEKTIVEN KANALS UND VORRICHTUNG UND VERFAHREN ZUR BEREITSTELLUNG VON PILOTSEQUENZEN

DISPOSITIF ET PROCEDE POUR ESTIMER UN CANAL EFFECTIF ET DISPOSITIF ET PROCEDE DE GENERATION DE SEQUENCES PILOTES

(84) Designated Contracting States:
**DE GB**

(43) Date of publication of application:
**02.11.2006 Bulletin 2006/44**

(73) Proprietor: **NTT DoCoMo, Inc.
Tokyo (JP)**

(72) Inventor: **AUER, Gunther
80339 Munich (DE)**

(74) Representative: **Zinkler, Franz et al
Schoppe, Zimmermann, Stöckeler & Zinkler
Hermann-Roth-Weg 1
82049 Pullach bei München (DE)**

(56) References cited:
**US-A1- 2002 101 825      US-A1- 2002 118 771
US-A1- 2003 043 887**

• **SUGBONG KANG ET AL: "Channel estimation for OFDM systems with transmitter diversity for a quasi-static fading channel" PROCEEDINGS - IEEE MILITARY COMMUNICATIONS CONFERENCE MILCOM 2003, vol. 1, 13 October 2003 (2003-10-13), pages 309-313, XP010698258**

**EP 1 716 679 B1**

**Description**

The present invention is in the field of telecommunications and, in particular, in the field of channel estimation in a multiple input scenario, in which a receiver receives signals from more than one transmit antenna.

The steadily-increasing demand for high data rates necessary for today's and future mobile radio applications requires high data rate transmission techniques efficiently exploiting the available bandwidth or, in other words, the achievable channel capacity. Therefore, multiple input multiple output (MIMO) transmission systems have achieved considerable importance in recent years. MIMO systems employ a plurality of transmitting points, each of the transmitting points having a transmit antenna, and a plurality of receiving points, each of the receiving points having a receiving antenna, to receive signals being transmitted by the multiple transmitting points through different communication channels. An important subset of MIMO systems are multiple input single output (MISO) systems, employing a plurality of transmitting points and a single receiving point receiving signals being transmitted by the multiple transmitting points through different communication channels extending from a respective transmitting point to the (common) receiving point.

MIMO systems, i.e. systems employing several transmit and receive antennas, may be used to improve capacity of mobile communication systems. Among a plurality of MIMO transmission techniques, cyclic delay diversity technique (CDD) is a promising candidate for the future communication systems. CDD is a transmit antenna diversity scheme where multiple transmit antennas transmit delayed versions of the same signal, as is described in A. Dammann and S. Kaiser, "Standard Comfortable Antenna Diversity Techniques for OFDM and its Application to the DVB-T System", in Proc. IEEE Global Telecommunication Conference (GLOBECOM 2001); San Antonio, USA, pp. 3100-3105, Nov. 2001. More specifically, CDD technique transforms a MIMO channel into an equivalent single input multiple output (SIMO) channel with increased frequency selectivity, i.e. the spatial diversity is transformed into frequency diversity, wherein each version of the origin signal is delayed by an antenna specific delay which a design parameter.

Cyclic delay diversity technique is preferably used in multicarrier transmission scenarios, like for example OFDM (orthogonal frequency division multiplexing), since, if a cyclic delay is inserted, inter-symbol interference (ISI) can be avoided, so that, for example, an orthogonality of the OFDM scheme is maintained. Since an outer channel decoder, for example a trellis decoder, can exploit the diversity of the frequency selective channel, CDD can be considered as being an additional source of diversity.

Multi-carrier modulation, in particular orthogonal frequency division multiplexing (OFDM), has been successfully applied to a wide variety of digital communication systems. OFDM was first introduced in the 1960s. Efficiently, OFDM modulation techniques can be utilized using the discrete Fourier transform (DFT). By inserting a cyclic prefix into the guard interval (GI) longer than the maximum delay of the communication channel, inter-symbol interference (ISI) can be eliminated completely and the orthogonality of the received signal is preserved. Since future mobile communication systems should support data rates several times higher than current systems, multi-carrier systems with proper coding and interleaving offer both, efficient implementation through the application of the fast Fourier transform (FFT) providing a spectral representation of the received signal, and sufficient robustness to radio channel impairments.

In another OFDM-based approach, termed multi-carrier CDMA (MC-CDMA, multi-carrier code division multiplexing), where spreading in frequency and/or time direction is introduced in addition to the OFDM modulation. MC-CDMA has been deemed a promising candidate for the downlink of 4G systems as is described in S. Abeta, H. Atarashi, and M. Sawahashi, "Performance of Coherent Multi-Carrier/DS-CDMA and MC-CDMA for Broadband Packet Wireless Access," IEICE Transactions on Communications, vol. E84-B, pp. 406-414, Mar. 2001.Moreover, in H. Atarashi and M. Sawahashi, "Variable Spreading Factor Orthogonal Frequency and Code Division Multiplexing (VSF-OFCDM)," in 3rd International Workshop on Multi-Carrier Spread, Spectrum, & Related Topics (MC-SS 2001), Oberpfaffenhofen, Germany, Sep. 2001, a MC-CDMA system using a variable spreading factor, namely variable spreading factor of orthogonal frequency and code division multiple access (VSF-OFCDM) for the downlink of a 4G air interface is described.

Systems employing multiple transmit and receive antennas (MIMO) can be used with OFDM in order to improve the communication capacity and quality of mobile radio systems. For OFDM systems with multiple transmit antennas, such as space-time codes as described in A. Naguib, N. Seshadri, and A. Calderbank, "Space Time Coding and Signal Processing for High Data Rate Wireless Communication," IEEE Signal Processing Magazine, pp. 76-92, May 2000 or spatial multiplexing, different signals are transmitted form different transmit antennas simultaneously. In A. Wittneben, "A New Bandwidth Efficient Transmit Antenna Modulation Diversity Scheme for Linear Digital Modulation," in Proc. IEEE Int. Conference on Communications (ICC' 93), Geneva Switzerland, pp. 1630-1634, May 1993, a low complexity transmit delay diversity scheme is described, where different antennas transmit delayed versions of the data stream. This means that artificial inter-symbol interference (ISI) is created. If an equalizer is employed at the receiver for equalizing, which is often required for mobile communication systems, diversity can be exploited, if the signals from different transmit antennas comprised by different transmitting points are uncorrelated.

The original transmit diversity scheme as it is described in the above-mentioned document can be applied to OFDM, termed cyclic delay diversity (CDD). By exploiting the property that a DFT (discrete Fourier transform) translates cyclic shifts to phase shifts, cyclic delay diversity can be provided without introducing ISI. This provides a transmitter

2

structure having low complexity, while a conventional OFDM receiver is retained. This implies that CDD can be incorporated in existing standards, such as the wireless LAN (local area network) standard, 802.11a and HIPERLAN/2 standard or the digital broadcasting standard DVB-T without changing the standards specifications. Unfortunately, as CDD makes the channel more frequency selective, a standard channel estimator may experience a large estimation error partly compensating the achieved diversity gain. Especially for large cyclic delays, which appear to achieve favourable performance for CDD-OFDM with perfect channel knowledge, the frequency selectivity of the observed channel is very severe.

One of the main advantages of CDD-OFDM is that receiver remains unaffected, i.e. the same receiver structure, for example a single antenna OFDM system, can be used.

However, the use of CDD which is a coherent transmission technique in wireless systems requires tracking of the mobile radio channel which is known as a channel estimation. For example, transmitting an OFDM signal over a multipath fading channel, the received signal will have unknown amplitude and phase variations. For coherent transmission, these amplitude and phase variations should be estimated by applying channel estimation techniques.

The more frequency selective a channel is, the better a coded OFDM system will perform. As has been mentioned above, CDD transforms a multiple input channel into an equivalent single input (single antenna) channel with increased frequency selectivity. For example OFDM with CDD it was found by G. Bauch and J. S. Malik, "Parameter Optimization, Interleaving and Multiple Access in OFDM with Cyclic Delay Diversity," to be published in Vehicular Technology Conference (VTC-spring 2004), Milan, Italy, Apr. 2004, that the cyclic delay should be as large as possible. However, transmitting over frequency selective communication channel requires efficient channel estimation techniques providing precise channel estimates describing the frequency selective behaviour of the communication channel. The frequency behaviour of the communication channel is usually described by its channel transfer function, which is a spectral representation of a channel impulse response.

Usually, channel estimation is performed on a basis of pilot sequences (pilot symbols) being transmitted from a transmitter to a receiver, so that a communication channel or a plurality of communication channels can be estimated by exploiting the (known) pilot sequences and received versions thereof. At the receiver, the (known) pilot symbols and received versions thereof are evaluated in order to obtain an estimate of e.g. a channel transfer function, which is important for OFDM systems. For pilot symbol aided channel estimation (PACE), the OFDM-based systems, including MC-CDMA, can employ exactly the same algorithms to estimate the channel impulse response. Thus, for the sake of the descriptional simplicity, in the following reference is made to OFDM systems by the way of example only. An extension to other OFDM-based systems is straightforward.

However, the channel estimation becomes more difficult with increasing frequency selectivity of a communication channel to be estimated since the channel transfer function has to be sampled at many frequency points. Since CDD-OFDM makes the channel become more frequency selective, the achievable performance gain will be limited due to poor channel estimation associated with poor channel estimates.

Since the CDD transmission technique is a new research field, the channel estimation problem especially for CDD transmission systems has not been solved yet.

The prior art approaches referring to channel estimation for CDD assume either that the channel is perfectly known, which implies a perfect knowledge of the coefficients of the channel input response, or channel estimation is performed using conventional single input single output (SISO) channel estimators, i.e. estimators which are used in a single antenna system. However, this channel estimation approach provides satisfactory results only for small cyclic delays. As is derived in G. Bauch and J. S. Malik, "Parameter Optimization, Interleaving and Multiple Access in OFDM with Cyclic Delay Diversity," to be published in Vehicular Technology Conference (VTC-spring 2004), Milan, Italy, Apr. 2004, the cyclic delay should be as large as possible in order to fully exploit the channel frequency selectivity provided by the CDD.

In the following, the CDD-OFDM approach will be described n detail.

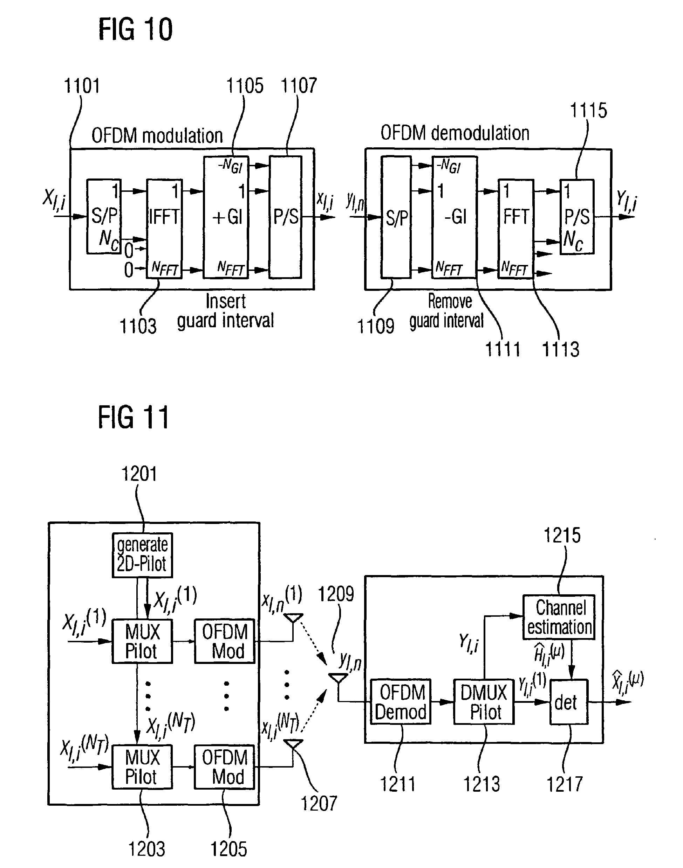

Fig. 10 shows a block diagram of an OFDM modulator (left hand side) and an OFDM demodulator (right hand side), respectively.

The OFDM modulator comprises a serial to parallel converter 1101 (S/P) having $N_c$ outputs coupled to a IFFT-transformer 1103 (IFFT = inverse fast Fourier transform). The IFFT-transformer 1103 has $N_{FFT}$ outputs coupled to a guard interval insertion block 1105 (GI = guard interval). The guard interval insertion block 1105 has a plurality of outputs coupled to a parallel to serial converter 1107 (P/S) having an output for providing a transmit signal.

The OFDM demodulator shown on the right hand side of Fig. 10 has a structure which is inverse to that of the OFDM modulator. In particular, the OFDM demodulator comprises a serial to parallel converter 1109 having an input and a plurality of outputs coupled to a guard interval removal block 1111. The guard interval removal block 1111 has a plurality of outputs coupled to a FFT-transformer 1113 having $N_{FFT}$ inputs and a plurality of outputs, wherein $N_c$ outputs of the FFT transformer 1113 are coupled to a P/S-converter 1115 having an output for providing a received signal.

For the considered OFDM-based MIMO system, one OFDM modulator is employed for each transmit antenna, while OFDM demodulation is performed independently for each receive antenna. For OFDM, the signal stream is divided into $N_c$ parallel sub-streams, typically for any multi-carrier modulation scheme. The $i^{th}$ sub-stream, commonly termed sub-carrier, of the $1^{th}$ symbol block, named OFDM symbol, is denoted by $X_{l,i}$. An inverse DFT with $N_{FFT}$ points is performed on each block, and subsequently the guard interval having $N_{GI}$ samples is inserted to obtain $x_{l,n}$. After digital to analog conversion (D/A), the signal x(t) is transmitted over a mobile radio channel having an impulse response $h(t,\tau)$.

Fig. 11 shows a block diagram of a multiple input single output (MISO) OFDM system for channel estimation.

The transmitter shown on the left hand side of Fig. 11 comprises a block 1201 for generating two-dimensional (2D) pilot sequences for estimating the communication channels in frequency and in time direction. Additionally, the transmitter comprises a plurality of multiplexers 1203 for inserting the pilot sequences into data streams to be transmitted and a plurality of OFDM modulators 1205 for modulating the resulting signals, wherein each of the OFDM modulators is coupled to a respective transmit antenna 1207 for transmitting the modulated signals through a plurality of communication channels to a receiver shown on the right hand side of Fig. 11.

The receiver comprises a receive antenna 1209 coupled to an OFDM demodulator 1211. An output of the OFDM demodulator 1211 is coupled to a demultiplexer 1213 (DMUX) for demultiplexing the received versions of the pilot sequences. The demultiplexer 1213 is coupled to a channel estimator 1215 for channel estimation and to a detection block 1217, for example an equalizer, for providing a received data stream.

In the context of channel estimation for systems employing several transmit antennas, reference is usually made to multiple input single output systems, i.e. systems employing one receive antenna. As far as channel estimation is concerned, an extension to MIMO systems is straight forward since channel estimation is performed at each receive antenna branch independently. For this reason, in the following MISO systems will be considered.

Generally, each transmit antenna transmits an independent data stream propagating through a communication channel, which is denoted by $x^{(\mu)}(t)$ and $h^{(\mu)}(t,\tau)$, wherein $\mu$ denotes a transmit antenna index. At the receiver, these signals are superimposed.

Assuming perfect synchronization, a received signal of an equivalent bass band system at sampling instants $t = [n + \ell N_{sym}]T_{spl}$ is in the form

$$Y_{\ell,n} \overset{\Delta}{=} y([n + \ell N_{sym}]T_{spl}) = \sum_{\mu=1}^{N_T} \int_{-\infty}^{\infty} h^{(\mu)}(t, \tau) \cdot x^{(\mu)}(t - \tau)d\tau + n(t)\Big|_{t=[n+\ell N_{sym}]T_{spl}}$$

where $N_T$ denotes a total number of transmit antennas, $x^{(\mu)}(t)$ denotes a transmitted signal of transmit antenna $\mu$ after OFDM modulation, n(t) represents additive Gaussian noise, and $N_{sym} = N_{FFT} + N_{GI}$ accounts for the number of samples per OFDM symbol. At the receiver, guard interval is removed and the information is recovered by performing a DFT on the received block of signal samples to obtain an input of the OFDM demodulation $Y_{\ell,i}$. The received signal after OFDM demodulation is given by

$$Y_{\ell,i} = \sum_{\mu=1}^{N_T} X_{\ell,i}^{(\mu)} H_{\ell,i}^{(\mu)} + N_{\ell,i}$$

where $X_{\ell,i}^{(\mu)}$ and $H_{\ell,i}^{(\mu)}$ denote the transmitted information symbol and the channel transfer function (CTF) of transmit antenna $\mu$ at sub-carrier i of the $1^{th}$ OFDM symbol, respectively. The term $N_{l,i}$ accounts for additive white Gaussian noise (AWGN) with zero mean and variance $N_0$. It is assumed in the following, that the transmitted signals consist of L OFDM symbols, each having $N_c$ sub-carriers.

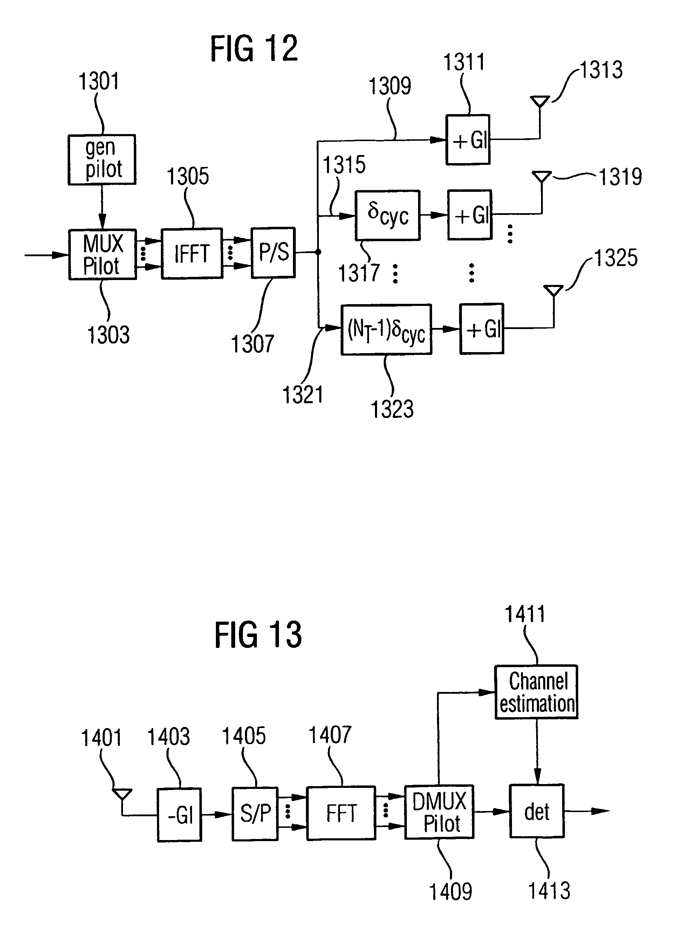

Fig. 12 shows a block diagram of a transmitter of a OFDM based system utilizing cyclic delay diversity (CDD).

The transmitter comprises a block 1301 for generating pilot sequences which are provided to a multiplexer 1303 for multiplexing same into a data stream provided via a further input of the multiplexer 1303. The multiplexer 1303 has a number of outputs coupled to a IFFT transformer 1305 (IFFT = inverse fast Fourier transform) having a plurality of outputs coupled to a parallel-to-serial converter 1037 (P/S). A signal provided by the P/S converter 1037 is then divided into $N_T$ identical copies, wherein $N_T$ denotes a number of transmitting points. A first copy provided via a signal path 1309 is provided to a guard insertion block 1311. After guard interval insertion, a resulting signal is transmitted via a first antenna 1313.

A second copy provided via a second signal path 1315 is provided to a cyclic delay element 1317. After guard interval insertion, a resulting signal is transmitted via a second transmit antenna 1319. Accordingly, a $N_T^{th}$ signal copy is provided via a $N_T^{th}$ signal path 1321 to a cyclic delay element 1323. After guard interval insertion, a resulting signal is transmitted via a $N_T^{th}$ antenna 1325.

A major difference to a standard OFDM system are the delay elements (delay units) in the transmitter inducing antenna specific delays of $\delta_{cyc}^{(\mu)}$ samples before guard interval insertion and further transmitter front end processing. Since a signal processing usually performed digitally, the delay elements may be formed to perform cyclic shifts.

Fig. 13 shows a block diagram of a corresponding receiver of a OFDM based transmission system. The receiver comprises a receive antenna 1401 coupled to a guard interval removal block 1403. After removing the guard interval, a resulting signal is provided to a serial to parallel converter 1405 (S/P) having a number of outputs coupled to a FFT transformer 1407. The FFT transformer 1407 has a plurality of outputs coupled to a demultiplexer 1409 (DMUX) being operative for de-multiplexing the received versions of the pilot sequences for channel estimation purposes. The demultiplexer 1401 is coupled to a channel estimator 1411 and to a detector 1413. The detector 1413 is for example operative for equalizing a received signal using channel estimates providers by the channel estimator 1411.

Since the receiver observes an equivalent single antenna channel, the receiver front end is unaffected whether CDD is used or not.

However, the CDD transmission technique makes the channel more frequency selective since cyclic delays in time domain (after the IFFT at the transmitter) are transformed to phase shifts at the receiver in the frequency domain (after the FFT at the receiver). Therefore, a reliable channel estimation is only possible, when using a standard OFDM receiver, when all sub-carriers are pilot symbols. This approach suffers, however, from the problem, that in this case no information transmission is possible during transmission of pilot sequences. In other words, the channel estimation can only be performed at certain time instants, so that a continuous tracking of channel variations cannot be performed. This issue will be addressed later in detail.

As has been mentioned above, the effective CTF comprises a superposition of a plurality of distinct CTFs associated with the distinct communication channels. However, the distinct CTFs are not superimposed in a straightforward way since each cyclic delay associated with a respective CTF introduces an additional channel characteristic associated with a delay factor introducing additional phase shifts. Therefore, a standard channel estimation unit of a conventional OFDM receiver would fail, when applied to channel estimation within a CDD transmission scenario. Although in A. Dammann and S. Kaiser, "Standard Conformable Antenna Diversity Techniques for OFDM and its Application to the DVB-T System", in Proc. IEEE Global Telecommunications Conference (GLOBECOM 2001), San Antonio, USA, pp. 3100-3105, Nov. 2001. it was stated that CDD is fully standard conformable to conventional OFDM receivers, the above-indicated problem clearly shows that, unfortunately, this is in general not the case, which will be elaborated later.

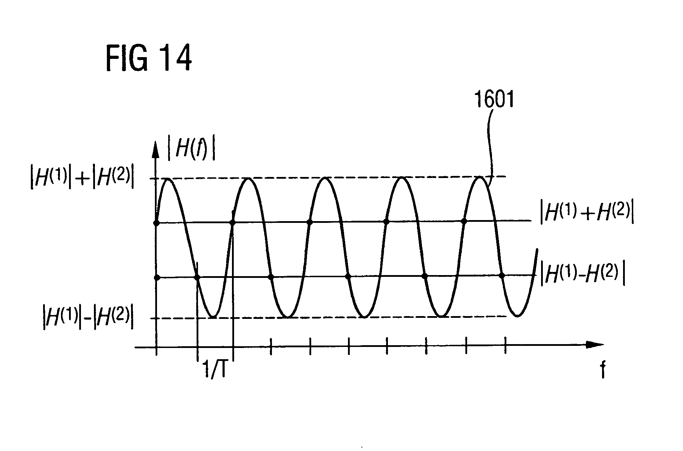

Fig. 14 demonstrates an influence of CDD on a characteristic of a resulting communication channel.

In order to demonstrate the effect of CDD-OFDM, an effective CTF 1601 is considered, by the way of example only, for $N_T$=2 transmit antennas, wherein a first flat fading channel extending from a first transmitting point to a receiving point has a CTF $H^{(1)}(f) = H^{(1)}$ and a second flat fading channel extending from a second transmitting point to the receiving point has a second CTF $H^{(2)}(f) = H^{(2)}$. The first CTF and the second CTF may be considered as being the CTFs of the first and second antenna, which are both frequency independent. Moreover, it is assumed that a cyclic delay of half of the OFDM symbol duration is inserted for the second antenna, $\tau_{cyc}^{(2)} = \delta_{cyc}^{(\mu)} T_{spl} = T / 2$, where T and $T_{spl}$ denote the OFDM symbol duration and the sampling duration. A snapshot of the magnitude 1601 of the effective CTF (observed CTF)demonstrates that the effective CTF is not frequency independent anymore. In other words, the cyclic delay diversity introduce a considerable amount of frequency diversity which is reflected by a frequency dependency of the effective CTF.

It can be seen that the two frequency flat but independently fading CTFs of the individual antenna branches $H^{(1)}$ and $H^{(2)}$ have been transformed to the frequency selective CTF H(f) at the receiver by cyclically delaying the transmitted signal of the second antenna. The magnitude 1601 of the effective CTF, $|H(f)|$, is a sine wave oscillating between $| H^{(1)}| + |H^{(2)}|$ and $|H^{(1)}| - | H^{(2)}|$.

For pilot-symbol aided channel estimation (PACE) known symbols (pilots) are inserted with an equidistant spacing of $D_f$ sub-carriers. By the way of example only it is assumed, that, in the case of the above example, $D_f = 2$, i.e. every second transmitted sub-carrier contains a pilot (pilot value). In this case only $H(f = 2i /T) = H^{(1)} + H^{(2)}$ can be observed. This means that a conventional SISO channel estimator which basically interpolates between the pilot symbols in order to estimate the channel on all sub-carriers would estimate a frequency flat channel $\hat{H}(i/T) = H^{(1)} + H^{(2)}$. This means that the channel cannot be estimated for odd subcarriers, which means that all odd sub-carriers are lost. Only using a pilot spacing of $D_f = 1$, i.e. all sub-carriers are pilot symbols, reliable channel estimation is possible even in the case of the symbol example above. However, this approach is associated above-discussed problem of an inefficient exploitation of the available bandwidth, since information transmission is not possible during transmission of pilot sequences.

One solution of the afore-mentioned problem is to insert a MISO pilot grid, that is each transmit antenna is allocated its own pilot sequence. Unfortunately, the simple transceiver structure of the CDD-OFDM system shown in Fig. 12 cannot be maintained. Instead, each transmit antenna does require its own IFFT unit since the pilot grid is inserted prior to OFDM modulation. This would result in a complex transmitter structure.

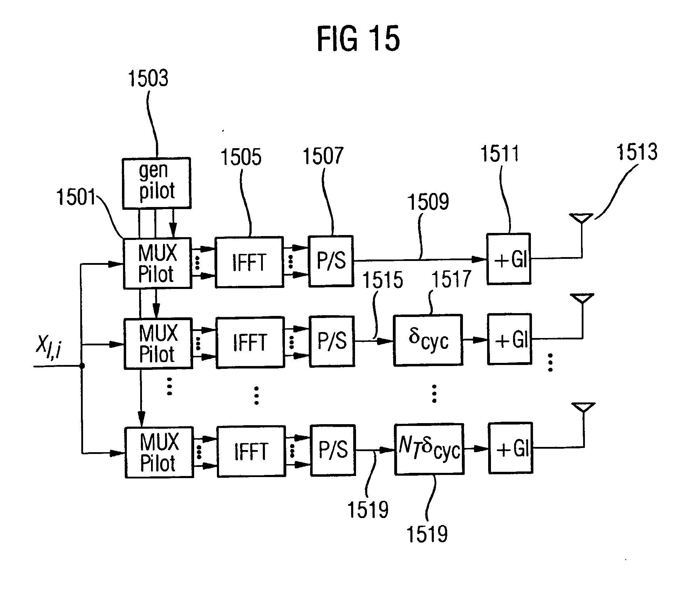

Fig. 15 shows a block diagram of a transmitter of a CDD-OFDM system using an individual pilot insertion unit for each antenna.

A data stream is divided into a plurality of identical copies, wherein each copy is provided to a respective multiplexer 1501 being operative for multiplexing pilot sequences generated by a pilot sequence generator 1503 into a respective copy of the data stream. The multiplexer 1501 has a plurality of outputs coupled to an IFFT transformer 1505 of a plurality of IFFT transformers. Each transformer 1505 has a plurality of outputs coupled to a parallel-to-serial converter 1507, wherein each parallel-to-serial converter is associated with a corresponding signal path. In accordance with the previous explanations, the first signal path 1509 is coupled to a guard insertion block 1511 having an output coupled to a first antenna 1513. Accordingly, a second signal path 1515 is coupled via a first delay element 1517 and a guard insertion block to a further transmit antenna of $N_T$ transmit antennas. Accordingly, a $N_T^{th}$ path 1519 of $N_T$ paths is coupled by a delay element 1519 and a guard insertion block to an associated transmit antenna.

The transmitter shown in Fig. 15 demonstrates the increased complexity of the resulting transmitter, when an extra IFFT unit is required for each antenna. This increases complexity conflicts with one of the main advantages of the CDD transmission technique, namely its simplicity, which would be compromised by the requirements of both the transmitter and the receiver.

For the receiver, the general structure as shown in Fig. 12 comprises a true MISO estimator, i.e. an estimator being suitable to estimate $N_T$ CTFs (CTFs) per sub-carrier. However, this is generally more complex than a single input single output (SISO) channel estimation unit.

The increased complexity is due to the fact that an extra signal processing part is to be used for each transmit antenna path in order to enable the receiver to separate the estimates of the CTFs of the distinct communication channels.

The same considerations apply for case of an effective channel impulse response comprising a superposition of a plurality of channel impulse responses associated with different communication channels.

The publication "Channel Estimation For OFDM Systems With Transmitter Diversity For A Quasi-Static Fading Channel", S. Kang and J. S. Lehnert, Proceedings IEEE Military Communications Conference MILCOM 2003, pages 309-313, Oct. 13 to 16, 2003, Monterey, CA, USA, discloses a channel estimation scheme with transmitter diversity. It is based on the assumption that the channel is highly correlated at nearby subcarriers. Thus, the pilot sequence is given a different circular time shift at each transmitter antenna, which is equivalent to phase modulation in the frequency domain. The channel estimator is the linear filter whose weight vectors can be precalculated.

Us 200270118771 A1 discloses methods and arrangements in a telecommunication system. Pilot signals are concurrently sent in order to increase bandwidth efficiency during a multitude of channel transfer functions in OFDM. Thus, non-interfering channel estimates are obtained. Particularly, the result of an Inverse Discrete Fourier Transform of a training sequence is cyclically rotated by a number of predetermined steps, which is different for each antenna branch.

US 2003/0043887 A1 discloses a communication system and methods of estimating channel impulse responses therein. Multiple Steiner codes are transmitted as bursts from multiple base stations. Accurate channel estimation is possible through the use of Wiener frequency domain MMSE deconvolution combined with frequency domain spatial decoupling matrices, with quasi-orthogonal pseudo-noise sequences allocated to base stations and their antenna elements.

US 2002/0101825 A1 discloses a transmitter having an orthogonal sequence source. Antenna branches receive sequences which are delayed with respect to a neighbouring antenna branch. On the receiver side, FIR filters are used. Each FIR filter performs least-squares processing on the baseband demodulated received training signal it receives. To this end, each of FIR filters uses as coefficients the complex conjugates of the base orthogonal sequence.

The transmitter shown in Fig. 15 demonstrates the increased complexity of the resulting transmitter, when an extra IFFT unit is required for each antenna. This increases complexity conflicts with one of the main advantages of the CDD transmission technique, namely its simplicity, which would be compromised by the requirements of both the transmitter and the receiver.

For the receiver, the general structure as shown in Fig. 12 comprises a true MISO estimator, i.e. an estimator being suitable to estimate $N_T$ CTFs (CTFs) per sub-carrier. However, this is generally more complex than a single input single output (SISO) channel estimation unit.

The increased complexity is due to the fact that an extra signal processing part is to be used for each transmit antenna path in order to enable the receiver to separate the estimates of the CTFs of the distinct communication channels.

The same considerations apply for case of an effective channel impulse response comprising a superposition of a plurality of channel impulse responses associated with different communication channels.

It is the object of the present invention to provide a concept for efficiently estimating an effective channel.

This object is achieved by a channel estimator in accordance with claim 1 or by a method for estimating an effective channel in accordance with claim 22 or by a computer program in accordance with claim 23.

The present invention is based on the finding that a modulated version of a pilot sequence, which can be a time domain signal or a frequency domain signal, results from a multiplication of a pilot sequence by a modulating sequence. If the modulating sequence represents a carrier wave having a non-zero carrier frequency, then certain values of the pilot sequence are multiplied by the same coefficients of the modulating sequence. In accordance with the present invention, the effective channel, i.e. an effective channel impulse response or an effective channel transfer function, is directly estimated by selecting one or more sets of selected values from a receive sequence, wherein each set of values comprises only values associated with the same coefficients of the modulating sequence used at a transmitter. Therefore, the modulation effect is not present. Each set of selected values comprises superimposed coefficients of different pilot sequences being transmitted through different communication channels, wherein the different communication channels may be represented by channel impulse responses or by channel transfer functions.

Referring again to the cyclic diversity scenario mentioned above by the way of example only, cyclically delaying a time domain signal introduces a coefficient dependent phase shift of a spectral representation of the time domain signal. This is equivalent to coefficient-wise multiplying the spectral representation of the time domain signal by a complex or real valued phase shift sequence, which is the modulating sequence, since this operation corresponds to up-converting or down-converting the spectral representation of the time domain signal when the phase shift sequence represents a carrier wave having a non-zero carrier frequency. Referring again to OFDM systems, a pilot sequence can also be modulated in frequency domain, when a frequency domain pilot sequence is multiplied by the modulating sequence. If the modulating sequence is chosen such that subsequent values of the modulating sequence or of the resulting sequence have the same magnitude and alternating sign, then the modulating sequence can be considered as a phase shift sequence. For example the phase shift sequence +1, -1, +1, -1 etc. introduces a coefficient-wise phase shift by 180°. In this case, the phase shift sequence (modulating sequence) may be considered as being a sampled version of a sine or a cosine wave.

Referring again to the case of the cyclic delay diversity scenario, by the way of example only, the effective channel transfer function can directly be estimated for subcarriers or, in other words, for frequency points which are associated with the same coefficients of the up-converting or down-converting phase shift sequence (modulating sequence). In the case of the above embodiment of a phase shift sequence, every second sub-carrier is associated with values (factors) of the phase shift sequence, which have a positive sign. Accordingly, every other second sub-carrier is associated with every other second value of the phase shift sequence having a negative sign. In accordance with the present invention, the effective channel transfer function can be estimated by separately estimating coefficients of the effective channel transfer function at frequency points (sub-carriers), which are associated with the same value with respect to a sign and a magnitude of the phase shift sequence (modulating sequence). Referring again to the above example, the effective channel transfer function can directly be estimated by separately estimating the effective channel transfer function at frequency points associated with every second sub-carrier (even sub-carriers) and at frequency points associated with every other second sub-carrier (odd sub-carriers).

The individual channel transfer functions can be reconstructed from the estimates of the effective channel transfer function. To do this, for example, an estimate of the channel transfer function on even sub-carriers and an estimate of the effective channel transfer function on odd subcarriers are interpolated so that $N_T$ estimates for each sub-carrier, determining the $N_T$ equations, are obtained.

For example, the cyclic delay corresponds to a half of the OFDM symbol duration, as has been discussed in connection with the embodiment of Fig. 14. In accordance with the present invention, the coefficients of the effective channel transfer function are estimated separately for even and odd sub-carriers. In this case, the up-conversion or downconversion effects resulting from multiplying the spectral representation by the coefficients of the phase shift sequence are compensated.

Generally speaking, in accordance with the present invention, the effective channel transfer function is estimated from a plurality of estimates of the effective channel transfer function at different sets of frequency points, wherein each set of frequency points is associated with equal coefficients of the phase shift sequence. In other words, estimating the effective channel transfer function at frequency points associated with a respective set of frequency points provides an estimate of the effective channel transfer function at these frequency points.

In accordance with the present invention, these estimates can be used for e.g. equalizing a spectral representation of a receive signal at those frequency points. However, the estimates of the effective channel transfer function at different frequency points can be merged to a composite estimate of the effective channel transfer function comprising estimates at every considered frequency point. In the case of the above-considered example, a resulting composite estimate of the effective channel transfer function comprises a plurality of coefficients, wherein every second coefficient corresponds to subsequent coefficients of the estimate of the effective channel transfer function at even sub-carriers, and every other second coefficient corresponds to the successive coefficients of the estimate of the effective channel transfer function at odd subcarriers.

In accordance with the present invention, by the way of example only, the simple CDD-transmission structure can be maintained even when a time-domain pilot sequence, a copy of which is to be delayed, results from a frequency-time conversion of a multi-carrier sequence in a CDD-OFDM scenario. The multi-carrier sequence can be obtained from, for example, assigning successive values of the first pilot sequence in frequency domain (origin sequence) to every $D_f{}^{th}$ sub-carrier of a plurality of successive sub-carriers of a multi-carrier modulation scheme. Therefore, information values can be assigned to the remaining sub-carriers, so that a simultaneous data transmission and pilot transmission for channel tracking is possible. Therefore, the pilot sequence in the time-domain comprises a training part and an information part.

A further advantage of the inventive concept is, that a simple transceiver structure for CDD-OFDM systems can be maintained which results in the fact that the conventional transmitter and receiver structures as shown in Fig. 12 and 13 for $D_f>1$ can be used. Such larger pilot spacings $D_f$ are required to support high velocities of the mobile user for bandwidth efficient and robust channel estimation schemes.

A further advantage of the present invention results from the fact, that the inventive concept enables using CDD-OFDM transmission systems with arbitrary cyclic delay $\delta_{cyc}^{(\mu)}$ . While the range of cyclic delays $\delta_{cyc}^{(\mu)}$ which can be supported with conventional channel estimation techniques is limited, arbitrary $\delta_{cyc}^{(\mu)}$ can be supported using the inventive scheme. The conventional SISO estimator must have a pilot spacing of $D_f = 1$, if the maximum cyclic delay

$$\tau_{cyc}^{(\mu)} = \delta_{cyc}^{(\mu)} T_{spl} = (\mu - 1)T / N_T$$ is chosen. On the other hand, the inventive estimation scheme provides an estimator for the maximum cyclic delay of $\tau_{cyc}^{(\mu)} = (\mu - 1)T / N_T$ . Moreover, constraints for the choice of $D_f$ are significantly less stringent when compared to the conventional estimator. This effectively allows to reduce the overhead due to the pilots, i.e. a pilot spacing $D_f$ can be increased. Moreover, the inventive concept improves a channel estimation performance since even for systems with $D_f = 1$ the inventive estimator is of advantage. Since a knowledge about cyclic delays are efficiently exploited at the receiver, the performance can be improved without increasing complexity and computational costs.

Moreover, the inventive concept can also be applied for estimating an effective channel impulse response at a receiver. The effective channel impulse response is a frequency-time converted version of the effective channel transfer function. If the pilot sequences are time domain signals, then a multiplication of a pilot sequence by a modulating sequence is equivalent to a coefficient-wise multiplication of time domain samples (values) of the pilot sequence by time domain values of the modulating or phase shift sequence. If the communication channels are flat fading channels, then the effective channel impulse response can be estimated in the same way in which the effective channel transfer function is estimated, since a flat fading channel does not introduce inter-symbol interferences or introduces negligible inter-symbol interferences. In this context, a flat fading channel is a channel having a channel impulse response of a short duration which is, for example, smaller than a time interval between two subsequent transmit signal values. For example, the channel impulse response is represented by only one tap representing the channel influence.

Therefore, subsequent coefficients of the effective channel impulse response comprising a superposition of the plurality of channel impulse responses can separately be estimated, since the considerations associated with the effective channel transfer function in frequency domain also apply for the effective channel impulse response.

Further embodiments of the present invention are described in detail with respect to the following figures, in which:

Fig. 1 shows a channel estimator in accordance with a first embodiment of the present invention;

Fig. 2 shows a channel estimator in accordance with a further embodiment of the present invention;;

Fig. 3 shows an effective channel input response in a CDD-OFDM system;

Fig. 4a, 4b and 4c show pilot grid structures;

Fig. 5 shows a pilot grid structure;

Fig. 6 shows a pilot grid structure;

Fig. 7 shows a block diagram of a modified CDD-OFDM transmitter in accordance with a first embodiment of the present invention;

Fig. 8 shows a pilot grid structure;

Fig. 9 shows an apparatus for providing $N_T$ pilot sequences in accordance with a first embodiment of the present invention.

Fig. 10 shows block diagrams of an OFDM modulator and of an OFDM de-modulator;

Fig. 11 shows a block diagram of a MISO-OFDM system;

Fig. 12 shows a block diagram of a CDD-OFDM-transmitter;

Fig. 13 shows a block diagram of a OFDM receiver;

Fig. 14 shows a magnitude of an effective channel transfer function in a CDD-scenario; and

Fig. 15 shows a block diagram of a CDD-OFDM transmitter using an individual pilot insertion unit for each antenna.

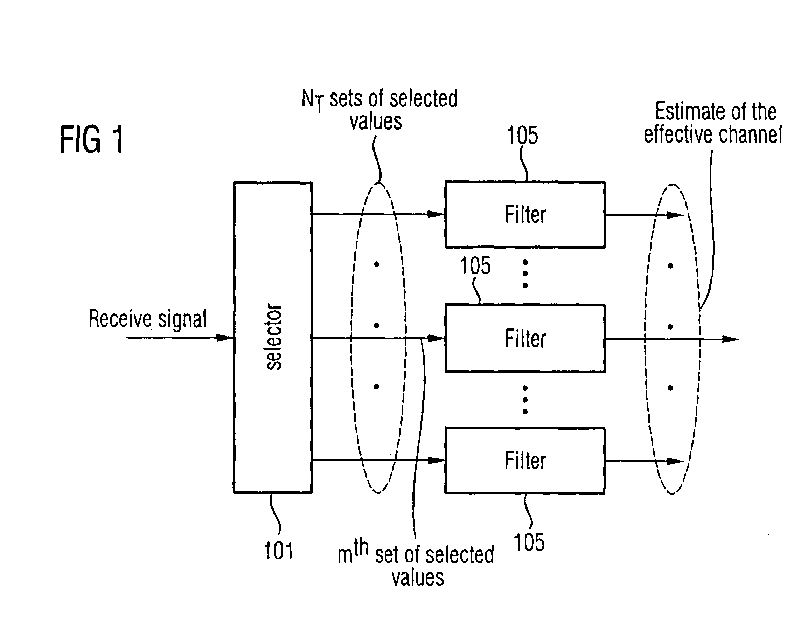

Fig. 1 shows a block diagram of the inventive channel estimator for estimating an effective channel from a receive sequence.

The channel estimator comprises a selector 101 being operative for receiving a receive sequence via an input or via a plurality of inputs. The selector 101 has $N_T$ outputs, wherein $N_T$ denotes a number of communication channels or, in other words, a number of transmitting points at a receiver. Each output of the selector is coupled to a filter 105 of $N_T$ filters, wherein each filter 105 has an output.

The inventive channel estimator shown in Fig. 1 is operative for estimating an effective channel from a receive sequence. The receive sequence is a time domain signal or a frequency domain signal. More specifically, the receive sequence includes a superposition of $N_T$ pilot sequences being transmittable from $N_T$ transmitting points through $N_T$ communication channels to a receiving point. From the $N_T$ pilot sequences, $N_T$-1 pilot sequences may be modulated versions of a first pilot sequence as has been explained above. The effective channel comprises a superposition of $N_T$ channels extending from $N_T$ transmitting points to the receiving point, wherein the receiving point comprises the inventive channel estimator. If the receive sequence is a time domain signal, then the effective channel is an effective channel impulse response comprising a superposition of $N_T$ channel impulse responses associated with $N_T$ distinct communication channels. Accordingly, if the receive sequence is a frequency domain signal, then the effective channel is an effective channel transfer function comprising a superposition of $N_T$ channel transfer functions associated with the $N_T$ communication channels.

In accordance with the present invention, the selector 101 is operative for providing $N_T$ sets of selected values, wherein each set of selected values comprises selected values associated with the same value (factor) of a modulating sequence or, in other words, of a phase shifting sequence modulating the first pilot sequence.

More specifically, the inventive selector 101 is operative for providing a $m^{th}$ set of selected values of $N_T$ sets of selected values by selecting every $(DN_T)^{th}$ value from a set of values comprised by the receive sequence or, in other words, form the receive sequence, starting with a $m^{th}$ value in the set of values, wherein D denotes a pilot spacing.

If the pilot spacing $D = 1$, then all values of the receive sequence comprise pilot information, i.e., a pilot sequence values. If $D>1$, then every $D^{th}$ value in the set of values comprised by the receive sequence includes pilot information. For example, the receive sequence is a time domain signal comprising a superposition of a plurality of time domain transmit signals. For example, a first transmit signal comprises the first pilot sequence, and the other transmit signals comprise modulated versions of the first pilot sequence. If $D= 1$, then the first transmit signal comprises only the first pilot sequence, since subsequent values of the first transmit signal are subsequent values of the first pilot sequence. If $D>1$, then the subsequent values of the first pilot sequence are assigned to every $D^{th}$ value of the first transmit signal and the other values of the transmit signal may be, for example, information values. To be more specific, the transmit signal comprises in this case D-1 information values placed between subsequent values of the first pilot sequence. If the receive sequence is a time domain signal, then $D = D_t$, wherein $D_t$ denotes a time instant between two subsequent values of a transmitted pilot sequence.

If the receive sequence is a frequency domain signal, then D denotes pilot spacing in frequency domain, so that every $D^{th}$ value of the receive sequence is associated with a sub-carrier comprising channel information. Accordingly, $D = D_f$ in this case, wherein $D_f$ denotes a pilot spacing in frequency domain, i.e., a frequency interval between two subcarriers containing pilot sequence values or, generally, pilot information.

In order to select the $m^{th}$ set of selected values, the selector is operative for selecting, for example, the $m^{th}$ subset starting with the $m^{th}$ value in the set of values. Hence, the index m is a numbering index providing information on a beginning of the $m^{th}$ set to be selected.

Each of the $N_T$ sets of selected values is filtered by an associated filter 105 in order to provide the estimate of the effective channel. For example, the filter 105 for filtering the $m^{th}$ set of selected values is formed to provide a $m^{th}$ set of filtered values comprising an estimate of the effective channel at points associated with the $m^{th}$ set of filtered values, wherein the points may be time instants for the case of a time domain receive sequence or frequency points (sub-carriers) in the case of a frequency domain receive sequence.

More specifically, each of the filter 105 is operative for providing an estimate of the effective channel, which can be an estimate of the effective channel transfer function or of the effective channel input response. The $N_T$ filter 105 provide $N_T$ estimates of the effective channel at different points, i.e., at different frequency points or at different time-points.

If D>1, then the receive sequence comprises a number of subsequent receive sequence values, wherein every $D^{th}$ receive sequence value comprises pilot information determined by a value of the first pilot sequence. Referring to the $m^{th}$ set of selected values by the way of example only, the filter 105 is an interpolation filter being operative for interpolating between subsequent values in the $m^{th}$ set of selected values comprising pilot information for providing a $m^{th}$ interpolated set of values comprising interpolated values between subsequent values of the $m^{th}$ set of selected values. In other words, the filter 105 associated with a $m^{th}$ signal path determined by the $m^{th}$ set of selected values interpolates between the subsequent values in the, which are used as sampling points or supporting points for interpolation, in order to provide the interpolated values. Moreover, the filter 105 is operative for providing the $m^{th}$ interpolated set of selected values as the $m^{th}$ set of selected values. The other filter 105 operate in the same way.

The filter 105 bay be operative for providing D-1 interpolated values between subsequent values in each set of selected values. For example, the filter 105 associated with the $m^{th}$ set of selected values is operative for providing D-1 interpolated values between subsequent values in the $m^{th}$ set of selected values. In this case, a length of each set of selected values is extended to a length of the receive sequence, so that each filter 105 provides an estimate of the effective channel for each receive sequence value, or in other words, for each point, wherein each estimate of the effective channel of the $N_T$ estimates of the effective channel is provided by performing an interpolation scheme applied to different set of selected values. For example, the filter 105 are low pass interpolation filter or a polynomial interpolation filter or a Wiener interpolation filter. Moreover, the filter 105 can be low-pass filter.

As mentioned above, the receive sequence may be a time domain sequence. In this case, the effective channel is an effective channel impulse response comprising a superposition of $N_T$ channel impulse responses, wherein the receive sequence comprises a received version of a transmit sequence, for example, of the first transmit sequence mentioned above. The transmit sequence results from assigning subsequent values of the first pilot sequence to every $D^{th}$ value of the transmit sequence, wherein D denotes a time interval between subsequent values of the first pilot sequence in the transmit sequence, as has been explained above. In particular, each value of the first pilot sequence is followed by D-1 transmit values comprising, for example, an information to be transmitted, wherein the values of the first pilot sequence are pilot information, i.e., an additional information used for channel estimation. In the case of a time domain receive sequence, the selector is operative for providing the $m^{th}$ set of selected values starting with the $m^{th}$ value being receivable at a $m^{th}$ time instant, and selecting every $(DN_T)^{th}$ value being receivable at every $(DN_T)^{th}$ time instant. In other words, the time domain receive sequence may be a serial data scream which is processed in a sequential manner by the selector 101. Therefore, the selector 101 may comprise one input for receiving the receive sequence and $N_T$ outputs for providing the $N_T$ sets of selected values, wherein the $m^{th}$ set of selected values is provided via a $m^{th}$ output of the $N_T$ outputs.

However, the receive sequence in time domain may be a parallel data stream, when, before selecting, a serial to parallel converter is applied. In this case, the selector 101 comprises a plurality of inputs, wherein each input is associated with a single value of the receive sequence.

As has been mentioned above, the $N_T$ filter coupled to the $N_T$ outputs of the selector are interpolation filter being operative for generating D-1 interpolated values between subsequent values in the sets of values, wherein the $N_T$ sets of interpolated values comprise $N_T$ estimates of the effective channel impulse response. As has been mentioned above, in the case D = 1, the filter 105 may be operative only for e.g. low-pass filtering the selected sets of values without performing an interpolation operation in order to suppress, for example, channel noise.

In accordance with a further aspect of the present invention, the inventive channel estimator may further comprise means for calculating the $N_T$ channel impulse responses from the $N_T$ estimates of the effective channel impulse response by solving, for example, $N_T$ algebraic equations being determined by the $N_T$ estimates of the effective channel impulse response comprising a superposition of the $N_T$ channel impulse responses. Referring again to Fig. 14 and to the explanations associated therewith, the effective channel transfer function 1601 comprises the channel transfer functions in a superimposed manner. In the case of flat fading channels, the same physical effect can be observed in time domain, so that an effective channel impulse response can be observed. Therefore, the superimposed channel impulse responses comprised by the effective channel impulse response can be calculated in exactly the same way.

In accordance with the present invention, the channel impulse responses may be obtained from $N_T$ estimates of the effective channel impulse response, wherein the estimates are interpolated estimates. In accordance with the present invention, firstly, the estimates of the effective channel impulse response provided by each of the filter 105 are interpolated, so that interpolated estimate values of the effective channel impulse responses are provided for each time instant associated with a receive sequence value. Therefore, the inventive means for calculating the $N_T$ channel impulse responses uses $N_T$ interpolated estimates of the effective channel impulse response to provide channel impulse response values associated with a communication channel for all time instants or, in other words, for all time points.

As has been mentioned above, the receive sequence may be a frequency domain sequence obtained, for example, from a time-frequency conversion of a received time domain signal. In this case, the effective channel is an effective channel transfer function, wherein the receive sequence comprises a received version of a transmitted multi-carrier sequence associated with a multi-carrier transmission scenario, for example, OFDM. For example, the multi-carrier sequence comprises subsequent values which are assigned to subsequent sub-carriers of a multi-carrier modulation scheme. In this case, the first pilot sequence may be a frequency domain pilot sequence, wherein subsequent values of the first pilot sequence are assigned to every $D^{th}$ sub-carrier, wherein D denotes a pilot spacing in frequency domain in this case, i.e., $D = D_f$. For example, the remaining D-1 values of the multi-carrier sequence between a first value of the first pilot sequence and a second value of the pilot sequence are information signal values. In this case, the inventive selector 101 is operative for providing the $m^{th}$ set of selected values starting with the $m^{th}$ value being associated with a $m^{th}$ sub-carrier, and for selecting every $(DN_T)^{th}$ value being associated with every $(DN_T)^{th}$ sub-carrier.

The receive sequence in frequency domain may be a parallel data stream. Preferably, the inventive selector 101 comprises a number of inputs associated with a number of receive sequence values.

Accordingly, the $N_T$ filter 105 coupled to the $N_T$ outputs of the selector 101 are operative for providing $N_T$ sets of filtered values, wherein each set of filtered values comprises an estimate of the effective channel transfer function at frequency points determined by sub-carriers associated with the respective set of filtered values.

In the following it will be assumed for the sake of descriptional simplicity that the selector 101 outputs $N_T$ sets of selected values as serial data, i.e. the $m^{th}$ set of selected values is a serial data stream.

The filter 105 are operative for filtering the $N_T$ sets of selected values in order to provide estimates of the effective channel transfer function at frequency points determined by the sub-carriers associated with the corresponding set of filtered values. For example, the filter 105 associated with the $m^{th}$ set of selected values is operative for filtering the $m^{th}$ set of selected values in order to provide a $m^{th}$ set of filtered values comprising an estimate of the effective channel transfer function at frequency points determined by sub-carriers associated with the $m^{th}$ set of filtered values, i.e. at frequency points determined by every $D_f N_t{}^{th}$ sub-carrier starting with the $m^{th}$ sub-carrier.

Since a spectral representation of the $m^{th}$ set of selected values corresponds to the original spectral region, e.g. the base band spectral region, the $N_T$ filter are low pass filter applied to every set of selected values. For example, the $N_T$ filter are operative for reducing channel noise. Moreover, the $N_T$ filter can be low pass interpolation filter being operative for performing a polynomial interpolation or a Wiener interpolation.

For example, the $N_T$ filter are interpolation filter for interpolating in frequency direction. To be more specific, the $m^{th}$ set of selected values is associated with successive frequency points associated with every $D_f N_T$ sub-carrier. The $m^{th}$ filter is operative to provide the $m^{th}$ set of filtered values having intermediate values associated with intermediate frequency points between the successive frequency points by interpolating on the basis of filtering. In other words, the inventive filter performs an interpolation at frequency points associated with the same valuing factor, e.g. with the same phase shift sequence value.

In order to explain the operation of the inventive filter in the case of interpolation, reference is made again to Fig. 14 for the case, that the channel transfer function for odd sub-carriers can only be obtained at frequency points associated with every fourth sub-carrier. In this case, the inventive filter is operative for providing intermediate values at frequency points associated with every second even sub-carrier.

Moreover, the $N_T$ filter can be interpolation filter for interpolating in time direction. For example, the $m^{th}$ filter 105 associated with the $m^{th}$ set of selected values is operative for interpolating between corresponding values of the $m^{th}$ set of selected values or the $m^{th}$ set of filtered values at a first time instant and values of the $m^{th}$ set of selected values or of the $m^{th}$ set of filtered values at a second time instant to provide the $m^{th}$ set of selected values at an intermediate time instant between the first time instant and the second time instant. For example, a time interval between the time instants is determined by time instants at which the signals being transmittable from a transmitter contain training information. For example, the transmitter is operative to transmit the pilot sequences at every $D_t$ time instant or every $D_t$ signal frame, for example, OFDM symbol. In this case, the inventive interpolation filter 105 perform time interpolation so that estimates of the effective channel transfer function can be obtained at intermediate time instants. This is, for example, necessary for tracking a characteristic of a time-variant communication channel, where corresponding coefficients of the effective channel transfer function vary in time due to, for example, a non-zero velocity of a mobile receiver.

As mentioned above, the interpolation can be performed for every set of selected values before filtering. However, the interpolation can also be performed after filtering. Additionally, the filtering operation and the interpolation operation can be performed simultaneously.

In accordance with a further aspect of the present invention, the inventive filter 105 can be operative for performing both: interpolation in time direction and interpolation in frequency direction. For example, the filter are operative for performing time interpolation first in order to provide time interpolated values which are, in a next filtering step, used for interpolating in frequency domain. Accordingly, the inventive filter may be operative to perform time interpolation after frequency interpolation. Moreover, the inventive filter may be operative for interpolating in time and in frequency direction simultaneously. In this case, the inventive filter are operative for performing 2D filtering.

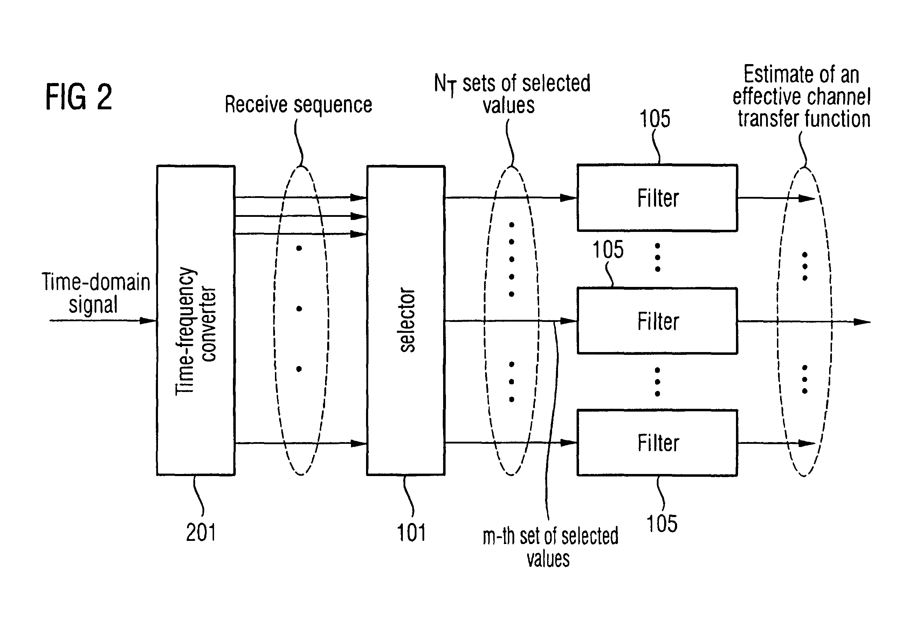

Fig. 2 shows a block diagram of the inventive channel estimator in accordance with a further aspect of the present invention.

The inventive channel estimator shown in Fig. 2 comprises a time-frequency converter 201 having an input and a plurality of outputs coupled to the selector 101. The time-frequency converter 201 is operative for time-frequency conversion of a time domain signal in order to obtain a spectral representation of the time domain signal which is the receive sequence.

For example, the time domain signal corresponds to a cyclic delay diversity transmission scenario, wherein $N_T$ time domain pilot sequences are transmittable from $N_T$ distinct transmitting points through $N_T$ distinct communication channels to a common receiving point, where $N_T$-1 time domain pilot sequences are cyclically delayed versions of a first time domain pilot sequence being transmittable from a first transmitting point. The first time domain pilot sequence results, for example, from a frequency time conversion of the previously mentioned multi-carrier sequence comprising the first pilot sequence in frequency domain. As mentioned above, the values of the first pilot sequence in frequency domain are assigned to every $D^{th}$ sub-carrier of the multi-carrier sequence, wherein D is a pilot spacing is equal to or greater than 1. Since cyclically delaying a time domain pilot sequence corresponds to a modulating a spectral representation of the time domain pilot sequence, the $N_T$-1 time domain pilot sequences have spectral representations, which are modulated versions of the first pilot sequence in the frequency domain.

Generally speaking, cyclically delaying a time domain signal is equivalent to a multiplication of a spectral representation of the time domain signal by a modulating sequence or, in other words, by a phase shift sequence.

As has been mentioned above, the multi-carrier sequence can comprise an information sequence having information values being assigned to the sub-carriers with exception of sub-carriers to which values of the first pilot sequence (in frequency domain) are assigned, i.e., with exception of every $D^{th}$ sub-carrier, wherein $D = D_f$.

For example, the $N_T$ time domain pilot sequences are transmitted through $N_T$ communication channels to a receiving point comprising the inventive channel estimator. Therefore, the time domain signal comprises a superposition of $N_T$ time domain pilot sequences being combined with channel impulse responses associated with $N_T$ distinct communication channels. Hence, the receive sequence in frequency domain comprises a superposition of $N_T$ pilot sequences (in frequency domain) being combined with channel transfer functions associated with the $N_T$ distinct communication channels.

In order to select values from the set of values for estimating the effective channel transfer function at frequency points associated with the same factor, for example, the same value of the resulting phase shift sequence at the transmitter. In accordance with the present invention, the selector 101 is operative for providing $N_T$ sets of selected values, wherein each set of selected values corresponds to sub-carriers being associated with the same factor (phase shift factor or modulating factor).

In order to provide a $m^{th}$ set of selected values of the $N_T$ sets of selected values, the inventive selector 101 is operative for selecting every $(DN_T)^{th}$ value from the sets of values provided by the time-frequency converter 201 starting with a $m^{th}$ value in the set of values. For example, the values in the set of values provided by the time-frequency converter 201 are associated with numbering indices, so that the selector 103 is operative for providing the $m^{th}$ set of selected values by selected values being associated with every $(DN_T)^{th}$ numbering index.

The time-frequency converter 201 can be a Fourier transformer being operative for performing a discrete Fourier transform etc. in order to obtain the receive sequence with the spectral representation of the time domain signal. Moreover, in the case of OFDM transmission, the time-frequency converter is the FFT transformer applied for demodulation.

The inventive selector 101 receives the spectral representation of the time domain signal and provides on a basis thereof $N_T$ sets of selected values as serial data streams. However, the inventive selector 101 may provide the $N_T$ sets of selected values as parallel data streams. In this case, the selector 101 has a number of outputs corresponding to the number of outputs of the time-frequency converter, wherein the outputs providing the $m^{th}$ set of selected values are grouped together. Since the filter 105 may be designed as a digital filter, a filtering operation can be performed on serial or parallel data.

In accordance with a further aspect of the present invention, the first pilot sequence (origin pilot sequence) at the transmitter, which is a frequency domain sequence, may comprise a scrambling sequence. For example, the first pilot sequence results from multiplying a further frequency domain pilot sequence in frequency domain (further origin pilot sequence) by the scrambling sequence in order to, for example, additionally protect signals to be transmitted through the plurality of communication channels from channel influences. In other words, the scrambling sequence additionally modulates the further origin pilot sequence. In order to remove the modulation, the time-frequency converter 101 comprises means for multiplying every $D_f^{th}$ value of the spectral representation of a time-domain receive signal by complex conjugated versions of successive values of the scrambling sequence to obtain a descrambled sequence as the spectral representation of the receive signal. For example, the means for multiplying comprises a multiplier assigned to every $D_f^{th}$ value of the spectral representation of the time-domain receive signal in order to perform the multiplication. Alternatively, the means for multiplying may be operative for multiplying every $D_f^{th}$ value of the spectral representation by inverse successive values of the scrambling sequence, which corresponds to a division operation.

At the transmitter, the origin pilot sequence values are assigned to every $D_f^{th}$ sub-carrier of the multi-carrier sequence starting with a $k^{th}$ sub-carrier of the multi-carrier sequence. A first origin pilot sequence value from the set of origin pilot sequence values may be assigned to any sub-carrier of the multi-carrier sequence, for example, to a fifth sub-carrier. In this case, the selector is operative to provide a first set of selected values by selecting every $D_f N_T^{th}$ value from the set of values provided by the time-frequency converter 101 (spectral representation of the receive signal) starting with a $k^{th}$ value of the spectral representation of the time-domain receive signal. In other words, the sub-carrier index k provides an information on a first sub-carrier containing pilot information to be selected.

In accordance with a further aspect of the present invention, the inventive channel estimator may further comprise means for providing information on the index k. This information can be provided from the transmitter via an additional information channel. Alternatively, this information can be pre-stored in accordance with a pre-agreed pilot grid scenario.

As mentioned above, the $N_T$ filter provide estimates of the effective channel transfer function at different frequency points. The different estimates can directly be applied for equalizing, decoding etc. In accordance with a further aspect of the present invention, the channel estimator may further comprise a composer for composing the estimates of the effective channel transfer function provided by the $N_T$ filter at different frequency points to obtain an estimate of a composite effective channel transfer function, as has been described above.

Referring again to the case of two transmit antennas, i.e. $N_T = 2$, the inventive channel estimator comprises two filter, wherein a first filter is operative for providing an estimate of the effective channel transfer function at frequency points associated with odd-numbered sub-carriers, and wherein a second filter is operative for providing an estimate of the effective channel transfer function at frequency points associated with even-numbered sub-carriers, or vice versa. The inventive composer is operative for composing the composite effective channel transfer function by assigning values of the effective channel transfer function at frequency points associated with odd-numbered subcarriers to odd-numbered sub-carriers of the composite effective channel transfer function and by assigning values of the effective channel transfer function (or of the estimate thereof) at frequency points associated with even-numbered sub-carriers to even-numbered sub-carriers of the composite effective channel transfer function. In other words, the inventive composer is operative for interlocking the estimates of the effective channel transfer function to obtain the composite effective channel transfer function or an estimate thereof.

In accordance with a further aspect of the present invention, the inventive channel estimator may further comprise means for removing an influence of the effective channel transfer function or of the effective channel impulse response, wherein the means for removing the influence may be, for example, an equalizer.

The means for removing the influence of the effective channel transfer function is coupled to the plurality of outputs of the time-frequency converter in order to receive the spectral representation of the receive signal containing the influence of the effective channel transfer function. The means for removing further comprises a further plurality of inputs, to which outputs of the filters are coupled in order to provide the estimate of the effective channel transfer function to the means for removing. In accordance with a further aspect of the present invention, the means for removing can be operative for receiving the estimate of the composite effective channel transfer function provided by the inventive composer mentioned above.

The means for removing has an output for outputting a processed signal, wherein the processed signal may be an equalized version of the spectral representation of the receive signal provided by the time-frequency converter. For example, the inventive channel estimator is used in a OFDM receiver. In this case, the means for removing the influence may be a frequency domain equalizer or a frequency domain decoder, for example a maximum likelihood decoder being operative for decoding the spectral representation of the receive signal using the estimate of the effective channel transfer function.

In accordance with a further aspect of the present invention, the inventive channel estimator may comprise means for calculating the $N_T$ channel transfer functions from the $N_T$ estimates of the effective channel transfer function by solving, for example, a set of algebraic equations being determined by the estimates of the effective channel transfer function, as has been shown in connection with the embodiment of Fig. 14 and as has been explained in connection with the effective channel impulse response.

In the following, the inventive concept will be described with respect to the receive sequence in frequency domain by the way of example only. It is to be noted, that the same considerations also apply in the case of a receive sequence in time domain. Furthermore, for the sake of notational simplicity, the first pilot sequence, which is a frequency-domain sequence, will be referred to as an origin pilot sequence. Accordingly, the time-domain pilot sequences will be referred to as pilot sequences.

By the inventive exploiting of the DFT (discrete Fourier transform) properties of CDD, the structure of the transmitter unit as shown in Fig. 12 can be retained, while the receiver can still fully utilize a MISO channel estimation unit. In other words, the inventive concept establishes a virtual MISO pilot grid with the conventional CDD-OFDM transmitter from Fig. 12. The term "virtual MISO pilot grid" describes the resulting spectral representations of the pilot sequence after introducing cyclic delays, so that each channel transfer function of the plurality of channel transfer functions experiences its own, unique training sequence.

The inventive concept is based on the DFT property that cyclic delays are translated to phase shifts by the DFT operation. This can be exploited if the cyclic delays $\delta_{cyc}^{(\mu)}$ are known to the receiver, since the receiver will observe transmit antenna dependent phase shifts of the received signal. If the system parameters are properly chosen, a set of phase shifted pilot sequences can be generated by the antenna dependent cyclic delay operation.

Referring again to the embodiment of Fig. 14, the cyclic shift of $\tau_{cyc}^{(2)} = \delta_{cyc}^{(\mu)} T_{spl} = T / 2$ will translate to a phase shift of $e^{-j\pi i} = (-1)^i = \{1,-1\}$, which will materialize in the CTF of the equivalent SISO channel $H(f)$, such that $H(i)/T) = H^{(1)} + H^{(2)}(-1)^i$. The inventive idea is based on a consideration of the oscillating sign of $H^{(2)}$ between even and odd sub-carriers as a phase shifted pilot sequence, which can be utilized as side information for the channel estimator. As mentioned above, the oscillating sign may be considered as being a sampled version of a sine or cosine carrier wave. While the possible choice of cyclic delays is not limited to $\tau_{cyc}^{(2)} = T / 2$, there are some constraints for the system parameters which result in appropriate virtual MISO pilot sequences. These constraints will be derived later.

In accordance with the present invention, the MISO channel estimation unit can further be simplified. This, however, requires a cyclic delay of $\tau_{cyc}^{(\mu)} = (\mu - 1)T / N_T$. In order to explain the inventive simplification, reference is made again to the embodiment of Fig. 14. The basic idea is to group the sub-carriers into two sets: odd and even sub-carriers. Even and odd sub-carriers have the CTF $H(2i / T) = H^{(1)} + H^{(2)}$ and $H([2i + 1]/T) = H^{(1)} - H^{(2)}$, respectively. The result is two independent CTFs per set. In the case the CTFs $H^{(1)}$ and $H^{(2)}$ are flat fading as indicated in Fig. 14, both $H(2i/T)$ and $H([2i + 1] / T)$ are also frequency flat, drawn as straight lines in Fig. 14. If the pilot spacing $D_f$ is an odd number, the pilot will be alternately placed on odd and even sub-carriers. Therefore, in accordance with the present invention, independent SISO channel estimator, one to estimate the CTF of the odd sub-carriers $\hat{H}([2i + 1]/T) = H^{(1)} - H^{(2)}$ utilizing pilot symbols, which lie on odd sub-carriers, and an equivalent estimator for the even sub-carriers, which estimates $\hat{H}(2i / T) = H^{(1)} + H^{(2)}$ are employed.

In order to explain the inventive concept in detail, in the following, a time-variant frequency selective fading channel modelled by a tapped delay line with $Q_0$ non-zero taps will be considered. It is assumed that the channel is time-limited by the maximum delay $\tau_{max} = Q \cdot T_{spl}$. The channel impulse response (CIR) impinging from transmit antenna $\mu$ is defined by

$$h^{(\mu)}(t, \tau) = \sum_{q=1}^{Q_0} h_q^{(\mu)}(t) \cdot \delta(\tau - \tau_q^{(\mu)})$$

where $h_q^{(\mu)}(t)$ and $\tau_q^{(\mu)}$ are complex amplitude and delay of the $q^{th}$ channel tap. The number of non-zero taps is typically smaller or equal to the maximum delay of the channel, $Q_0 \leq Q$. It is assumed that the $Q_0$ channel taps and all antennas are mutually uncorrelated. The channel taps $h_q^{(\mu)}(t)$ are zero-mean complex independent identically distributed (i.i.d.) Gaussian random variables. Due to a motion of the vehicle (mobile transmitter or mobile receiver) $h_q^{(\mu)}(t)$ will be time-variant caused by the Doppler effect. The $q^{th}$ channel tap $h_q^{(\mu)}(t)$ is a wide sense stationary (WSS) Gaussian process being band-limited by the maximum Doppler frequency $v_{max}$. It is commonly assumed that the channel impulse response (CIR) is approximately constant during one OFDM symbol so that the time dependency of the CIR within one OFDM symbol can be dropped for the sake of notational simplicity, i.e. $h_q^{(\mu)}(t) \approx h_{\ell,q}^{(\mu)}(t)$ for $t \in [\ell T_{sym}, (\ell + 1)T_{sym}]$. Although this is not strictly true only for time-invariant channels, this assumption is most often justified in practice and a good system design should ensure that the OFDM symbol duration is sufficiently short.

The channel transfer function mentioned above is the Furrier transform of the CIR $h^{(\mu)}(t, \tau)$. Sampling the result at time $t = \ell T_{sym}$ and frequency $f = i / T$, the CTF at sub-carriers i of OFDM symbol 1 becomes

$$H_{\ell,i}^{(\mu)} \;=\; H^{(\mu)}(\ell T_{sym}, i\,/\,T) \;=\; \sum_{q=1}^{Q_0} h_{\ell,q}^{(\mu)} e^{-j2\pi\tau_q i\,/\,T}$$

where $T_{sym} = (N_{FFT} + N_{GI})T_{spl}$ and $T = N_{FFT}T_{spl}$ represents the OFDM symbol duration with and without the guard interval, respectively.

If the guard interval is longer than the maximum delay of the channel, i.e. $N_{GI} \geq Q$, where $Q \geq Q_0$ denotes the total number of channel taps, the orthogonality at the receiver after OFDM demodulation is maintained and the received signal after OFDM demodulation is obtained.

The introduced channel model has been introduced for multiple input single output systems. Assuming the fading at the receiver antennas is mutually uncorrelated, the channel estimation will be performed independently for each antenna. Hence, an extension to a multiple input multiple output (MIMO) system is straight forward since the channel estimation is performed on each receive antenna separately.

In the following, reference is made to an OFDM system using cyclic delay diversity (CDD), as is shown in Fig. 12.

As is depicted in Fig. 12, there is a common signal stream for all transmit antennas until after the parallel to serial conversion (PS), i.e. only one IFFT is required. After the IFFT operation and parallel to serial conversion, the data stream is split into $N_T$ sub-streams, one for each transmit antenna, and an antenna dependent cyclic delay, $\delta_{cyc}^{(\mu)}$, is inserted

$$X_{\ell,n}^{(\mu)} \;=\; X_{\ell,(n-\delta_{cyc}^{(\mu)})\,\text{mod}\,N_{FFT}}\,.$$

Usually, the cyclic delay between adjacent transmit antennas is fixed such that

$$\delta_{cyc}^{(\mu)} \;=\; (\mu - 1)\cdot\delta_{cyc},\; 1 \leq \mu \leq N_T$$

where $\delta_{cyc}^{(\mu)}$ is a design parameter within the range $[0, N_{FET}\,/\,N_T]$. Hence, the signal transmitted on the first antenna is not delayed, $X_{\ell,n}^{(1)} = X_{\ell,n}$.

It is instructive to consider the signal before OFDM modulation, $X_{\ell,i}$, which is related to $x_{\ell,n}$ by the IDFT. Correspondingly, the IDFT of a cyclically delayed signal $x_{\ell,n}^{(\mu)}$ mentioned above is a phase shifted version of $X_{\ell,i}$. In mathematical terms the time domain signal of transmit antennas $\mu$ is related to the frequency domain transmitted signal by

$$X_{\ell,n}^{(\mu)} \;=\; X_{\ell,(n-\delta_{cyc}^{(\mu)})\,\text{mod}\,N_{FFT}}$$

$$=\; \frac{1}{\sqrt{N_{FFT}}}\sum_{i=0}^{N_c} \underbrace{X_{\ell,i}e^{j2\pi i(\mu-1)\delta_{cyc}\,/\,N_{FFT}}}_{X_{\ell,i}^{(\mu)}} \cdot e^{j2\pi in\,/\,N_{FFT}} \;=\; \frac{1}{\sqrt{N_{FFT}}}\sum_{i=0}^{N_c-1} X_{\ell,i}^{(\mu)}e^{j2\pi in\,/\,N_{FFT}}$$

where $X_{\ell,i}^{(\mu)}$ represents the transmitted frequency domain signal of transmit antenna $\mu$. It is to be noted that $X_{\ell,i}^{(\mu)}$ does exist only virtually, it is the equivalent signal which would be obtained by inducing phase shifts before OFDM modulation rather than time delays after OFDM modulation.

Subsequently, the guard interval (GI) is the form of a cyclic prefix is added, which is typical for OFDM modulation. Then, the signal is digital to analog converted (D/A), up-converted to the radio frequency (RF) carrier frequency and transmitted over a mobile radio channel. At the receiver, after down conversion to base band and sampling, the guard interval is removed, and an IFFT operation transforms the signal into the frequency domain, i.e. the sub-carrier level. After OFDM demodulation pilot symbols are de-multiplexed and fed to the inventive channel estimation unit (channel estimator).

The received signal consists of $N_T$ signals, as is described by one of the above equations. Hence, the following is obtained

$$Y_{\ell,i} = \sum_{\mu=1}^{N_T} X_{\ell,i}^{(\mu)} H_{\ell,i}^{(\mu)} + N_{\ell,i}$$

$$= X_{\ell,i} \underbrace{\sum_{\mu=1}^{N_T} H_{\ell,i}^{(\mu)} e^{j2\pi i(\mu-1)\delta_{cyc}/N_{FFT}}}_{H_{\ell,i}} + N_{\ell,i} = X_{\ell,i} H_{\ell,i} + N_{\ell,i}$$

where $H_{\ell,i}$ can be viewed at the resulting CTF of the CDD-OFDM system. This implies that the received signal is observed as a signal stemming from an equivalent SISO system having the CTF $H_{\ell,i}$. The effect of CDD is that the channel becomes more frequency selective. Without channel coding, no improvement can be observed. However, the channel is randomised by CDD, i.e. adjacent sub-carriers become de-correlated, so that error bursts are less likely, which is beneficial if channel coding is used.

In the following, the resulting SISO channel model for CDD-OFDM, i.e. the resulting SISO channel being observed by the receiver will be examined.

Assuming a tap delay line channel model, $H_{\ell,i}$ can be specified as

$$H_{\ell,i} = \sum_{\mu=1}^{N_T} H_{\ell,i}^{(\mu)} e^{-j2\pi i(\mu-1)\delta_{cyc}/N_{FFT}} = \sum_{\mu=1}^{N_T} e^{-j2\pi i\cdot(\mu-1)\delta_{cyc}/N_{FFT}} \sum_{q=1}^{Q_0} h_{\ell,q}^{(\mu)} e^{-j2\pi i\tau_q^{(\mu)}/T} .$$

It is seen that the phase term of the resulting CTF is determined by the propagation delays $\tau_q^{(\mu)}$ and the cyclic delay parameter $\delta_{cyc}$. It is interesting to note that $\delta_{cyc}$ is independent of the physical channel, a fact which can be exploited to make CDD-OFDM channel estimation more efficient.

In accordance to the resulting CTF, a resulting CIR can be defined, which describes the equivalent SISO channel of the CDD-OFDM system, that is

$$h(t,\tau) = \sum_{\mu=1}^{N_T} h^{(\mu)}(t,\tau) = \sum_{\mu=1}^{N_T} \sum_{q=1}^{Q_0} h_q^{(\mu)}(t) \cdot \delta(\tau - \tau_q^{(\mu)} - [\mu-1]\delta_{cyc} T_{spl}/N_{FFT})$$

comparing the resulting CIR with the CIR of transmit antenna $\mu$, the resulting CIR consists of $N_T Q_0$ non-zero taps, assuming that all $N_T$ CIR have $Q_0$ non-zero taps. It is seen that the CDD-OFDM system can be transformed into an equivalent SISO-OFDM system by appropriately delaying the CIRs of the $N_T$ transmit antennas. Apart from generating a channel which is more frequency selective, the effective maximum delay of the channel $\tau'_{max}$ becomes larger, and it is upper bounded by

$$\tau'_{max} = \tau_{max} + (N_T - 1)\delta_{cyc} T_{spl} .$$

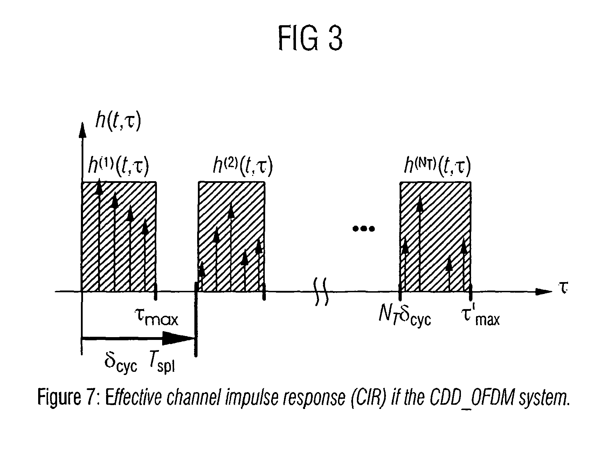

Fig. 3 shows an effective channel impulse response (a realisation of $h(t,\tau)$) of a CDD-OFDM system. As is depicted in Fig. 3, the effective channel impulse response comprises $N_T$ channel impulse responses, wherein $N_T$ -1 channel impulse responses are delayed with respect to a first channel impulse response.

Since the maximum delay of the channel is crucial for the design of the channel estimator, the extension $\tau'_{max}$ through CDD cannot be ignored. Most importantly, if pilot symbol added channel estimation (pace) is used, the estimator must satisfy the sampling theorem, which is determined by $\tau'_{max}$.

In the following, correlation properties of the channel will be discussed.

As mentioned above, each tap as well as each transmit and receive antenna are mutually uncorrelated. Assuming a wide sense stationary uncorrelated catering (WSS-US) channel, the outer correlation function of the CIR of the transmit antenna $\mu$ is in the general form

$$E[h^{(\mu)}(\tau, t)h^{(\mu)^*}(\tau + \Delta\tau, t + \Delta t)] = R_{hh}^{(\mu)}(\tau, \Delta t) \cdot \delta(\Delta\tau).$$

The outer correlation function of the $q^{th}$ tap delay $\tau_q$ can be written in a product form

$$R_{hh}^{(\mu)}(\tau_q, \Delta t) = E[h_q^{(\mu)}(t)h_q^{(\mu)^*}(t + \Delta t)]; \qquad q = 1, \cdots, Q_0$$
$$= R_{hh}'^{(\mu)}(\tau_q) \cdot R_{hh}''^{(\mu)}(\Delta t)$$

which implies that the correlation in frequency direction is independent from the correlation in time direction. The power delay profile of the channel $R_{hh}'^{(\mu)}(\tau_q) = \{E[|h_q^{(\mu)}(t)|^2] = \sigma_q^{(\mu)2}\}$ for q = [$Q_0$] is normalized such that the overall phase is one i.e. $\sum_{q=1}^{Q_0} \sigma_q^{(\mu)2} = 1$. The correlation function in time direction

$R_{hh}''^{(\mu)}(\Delta t) = \{E[h_q^{(\mu)}(t) \cdot h_q^{(\mu)^*}(t + \Delta t)]$ is assumed to be the same for all $Q_0$ taps.

Assuming Jake's model as is described in W.C. Jake.s, Microwave Mobile Communications. Wiley, NY, 1974, the correlation in time is described by a Bessel function, that is $R_{hh}''^{(\mu)}(\Delta t) = J_0(2\pi v_{max}\Delta t)$, where $v_{max}$ is the maximum Doppler frequency and $J_0(\cdot)$ accounts for a zero order Bessel function of the first kind.

Fourier transform of $R_{hh}^{(\mu)}(\tau, \Delta t)$ in the $\tau$ variable yields the frequency correlation function

$$E[H^{(\mu)}(f, t)H^{(\mu)^*}(f + \Delta f, t + \Delta t)] \stackrel{\Delta}{=} R_{HH}^{(\mu)}(\Delta f, \Delta t) = R_{HH}'^{(\mu)}(\Delta f)R_{HH}''^{(\mu)}(\Delta t).$$

Due to the product form, the correlation in time direction is independent of $\tau$. Thus, the correlation between OFDM symbol spaced $\Delta t = \Delta\ell \cdot T_{sym}$ apart in the frequency domain is the same as in the time domain

$$R_{HH}''^{(\mu)}(\Delta\ell) \stackrel{\Delta}{=} R_{HH}''^{(\mu)}(\Delta\ell \cdot T_{sym}) = R_{hh}''^{(\mu)}(\Delta\ell \cdot T_{sym})$$

the frequency correlation between sub-carriers spaced $\Delta f = \Delta i / T$ apart becomes

$$R_{HH}'^{(\mu)}[\Delta i] \stackrel{\Delta}{=} R_{HH}'^{(\mu)}(\Delta i / T) = \sum_{q=1}^{Q_0} \sigma_q^{(\mu)2} e^{-j2\pi \tau_q^{(\mu)}\Delta i / T}$$

For CDD, the frequency correlation function of the resulting CTF is of interest, which is the sum of the $N_T$ correlation functions. Furthermore, each frequency correlation function is phase shifted according to the cyclic delay of the respective transmit antenna. Thus, the resulting frequency correlation function is in the form

$$R'_{HH}[\Delta i] = \sum_{\mu=1}^{N_T} e^{-j2\pi\Delta i \cdot (\mu-1)\delta_{cyc} / N_{FFT}} \cdot R'^{(\mu)}_{HH}[\Delta i].$$

In the following, the principle of pilot-symbol aided channel estimation for OFDM will be addressed.

For pilot-symbol aided channel estimation (PACE), known symbols (pilots) are multiplexed into the data stream, which are used as side information to estimate the channel. In order to describe pilot symbol assisted channel estimation, it is useful to define a sub-set of the received signal sequence containing only the pilots, $\{\tilde{X}^{(\mu)}_{\tilde{\ell},\tilde{i}}\} = \{X^{(\mu)}_{\ell,i}\}$ with $\ell = \tilde{\ell}D_t$ and $i = \tilde{i}D_f$. So, the pilot sequence is transmitted at $D_f$ times lower rate $\tilde{i} = \lfloor i / D_f \rfloor$ in frequency direction, and at a $D_t$ times lower rate $\tilde{\ell} = \lfloor \ell / D_t \rfloor$ in time direction, respectively (as a general convention, variables describing pilot symbols will be marked with a ~ in the following). It is further assumed that the pilots $\tilde{X}_{\tilde{\ell},\tilde{i}}$ are chosen from a PSK constellation, by the way of example only, so that $|\tilde{X}_{\tilde{\ell},\tilde{i}}| = 1$.

After OFDM demodulation, the received signal $Y_{\ell,i}$ is obtained. For channel estimation, the received signal at the pilot positions is de-multiplexed from the data stream to obtain the received pilot sequence

$$\tilde{Y}_{\tilde{\ell},\tilde{i}} \stackrel{\Delta}{=} \tilde{X}_{\tilde{\ell},\tilde{i}}\tilde{H}_{\tilde{\ell},+\tilde{i}} + \tilde{N}_{\tilde{\ell},\tilde{i}} = X_{\ell,i}H_{\ell,+i} + N_{\ell,i} \qquad with \ \{\ell, i\} \in G$$

where G is the sub-set of the OFDM frame containing the pilots.

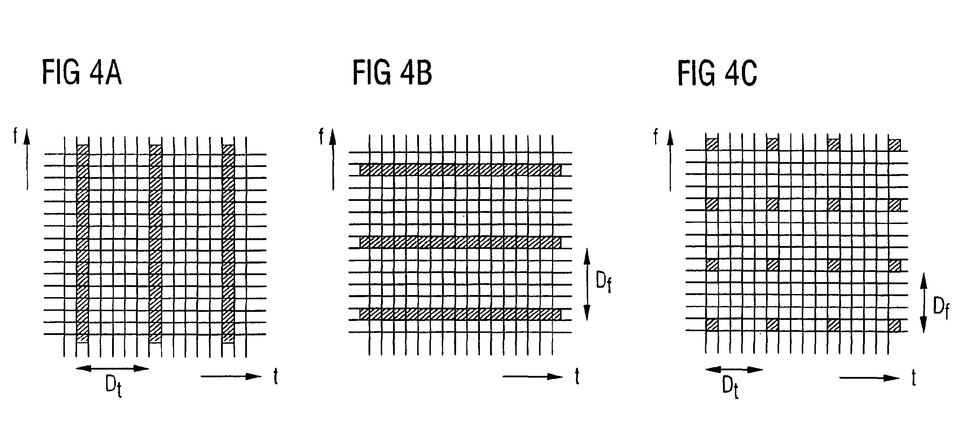

Figures 4a, 4b, and 4c show possible realizations of pilot grid structures. As is shown in Fig. 4a, one possibility of realizing a pilot grid is to transmit one OFDM symbol containing only pilots followed by $D_t$-1 data symbols. This scheme is applicable for channels with little time variations, as is observed in an indoor environment. In this case, interpolation in frequency direction is not necessary. Such a pilot grid structure is employed in the WLAN standards HIPERLAN/2 and 802.11a.

As is shown in Fig. 4b, another possibility of realizing a pilot grid is to transmit the pilots on reserved sub-carriers continuously. This scheme can support mobility but requires interpolation in frequency direction.

A more bandwidth efficient solution is to employ a scattered pilot grid, as is shown in Fig. 4c. Such a pilot grid structure is characterized by the spacing $D_f$ in frequency direction and $D_t$ in time direction, respectively.

When extending the idea of PACE to multi-carrier systems, it must be taken into account that for OFDM the fading fluctuations are in two dimensions, in time and in frequency. If the spacing of the pilots is sufficiently close to satisfy the two-dimensional (2D) sampling theorem, channel estimation and interpolation for the entire data sequence is possible. Thus, the overhead due to the pilots can be reduced but interpolation in time and frequency is required. A scattered pilot grid is used e.g. in the terrestrial digital TV standard DVB-T.

In the following, the principle of OFDM channel estimation by FIR filtering will be explained.

The first step in channel estimation process is to remove the modulation of pilot symbols, which can be introduced by the previously mentioned scrambling sequence. After removing the modulation, an initial estimate of the CTF at pilot positions is provided

$$\breve{H}_{\tilde{\ell},\tilde{i}} = \tilde{X}^{*}_{\tilde{\ell},\tilde{i}}\tilde{Y}_{\tilde{\ell},\tilde{i}} \approx \tilde{H}_{\tilde{\ell},\tilde{i}} + \tilde{X}^{*}_{\tilde{\ell},\tilde{i}}\tilde{N}_{\tilde{\ell},\tilde{i}}$$

with $\tilde{X}_{\tilde{\ell},\tilde{i}}\tilde{X}^{*}_{\tilde{\ell},\tilde{i}} = 1$, wherein $\tilde{X}_{\tilde{\ell},\tilde{i}}$ denotes the scrambling sequence used at the transmitter. Subsequently $\breve{H}_{\tilde{\ell},\tilde{i}}$ is processed by one of the two estimators described below.

In a typical indoor scenario, the channel may be quasi-static, i.e. channel variations within one OFDM frame can be neglected. In this case, a pilot grid transmitting one OFDM training symbol in the beginning of the frame may be transmitted, as is indicated in Fig. 4a. The channel estimator uses the demodulated pilots $\breve{H}_{\tilde{\ell},\tilde{i}}$ to yield the channel estimate

$$\hat{H}_{\ell,i} = \sum_{m=0}^{M_f-1} W'_m \cdot \breve{H}_{\tilde{\ell},\tilde{i}-m}$$

where $M_f$ denotes the filter order, i.e. the number of coefficients of the FIR filter $W'_m$. Channel estimation is performed once per frame for each sub-carrier. These estimates are used for the entire frame. In R. Nilsson, O. Edfors, M. Sandell, and P. Börjesson, "An Analysis of Two-Dimensional Pilot-Symbol Assisted Modulation for OFDM," in Proc. IEEE Intern. Conf. On Personal Wireless Communications (ICPWC '97), Mumbai (Bombay), India, pp. 71-74, 1997, and in P. Höher, S. Kaiser, and P. Robertson, "Pilot-Symbol-Aided Channel Estimation in Time and Frequency," in Proc. Communication Theory Mini-Conference (CTMC) within IEEE Global Telecommunications Conference (GLOBECOM '97), Phoenix, USA, pp. 90-96, 1997, two-dimensional (2D) filtering algorithm based on DIN A filtering are described for PACE. Using the scattered pilots (or parts thereof) of one OFDM frame, $\{\breve{H}_{\tilde{\ell},\tilde{i}}\}$, the channel estimate for sub-carrier i of OFDM symbol 1 is obtained

$$\hat{H}_{\tilde{\ell},\tilde{i}} = \sum_{n=0}^{M_t-1}\sum_{m=0}^{M_f-1} W_{m,n}(\ell,i) \cdot \breve{H}_{\tilde{\ell}-n,\tilde{i}-m}$$

where $W_{m,n}(\ell,i)$ represents the coefficients of the 2D FIR filter having $M_f M_t$ coefficients. Generally, a separate filter is required for each sub-carrier i and each OFDM symbol 1 within one frame. Such a 2D estimator structure may be, however, too complex for practical implementation. In order to reduce the complexity, separating the use of time and frequency correlation can be performed. This combined scheme, termed double one dimensional (2×1D) PACE uses separate Wiener filters, one in frequency direction and one in time direction. The channel estimate for 2×1D PACE can be expressed as

$$\hat{H}_{\ell,i} = \sum_{n=0}^{M_t-1} W''_n \sum_{m=0}^{M_f-1} W'_m \cdot \breve{H}_{\tilde{\ell}-n,\tilde{i}-m}$$

with the filter in frequency and in time direction, $W'_m$ and $W''_n$ are 1D estimators. 2×1D PACE is motivated by the fact that the 2D correlation function can be written in a product form, i.e., the correlation function in frequency and time are independent.

The FIR filters $W' = [W'_0, \cdots, W'_{M_f-1}]^T$ and $W'' = [W''_0, \cdots, W''_{M_t-1}]^T$ may be implemented as e.g. low pass interpolation filters, polynomial interpolators or Wiener interpolation filters. The Wiener interpolation filter minimize the mean squared error (MSE) between the desired response $H_{l,i}$ and the observation, i.e. the received pilot symbols. This means that knowledge about the channel statistics is required. In contrast, low pass interpolation filters and polynomial interpolators do not assume any knowledge of the channel statistics.

It should be noted that FIR filtering is not the only way to perform channel estimation. Another possibility is to transform the received pilot sequence to a transformation domain. An additional processing may be performed in the transformation domain. A resulting processed sequence is subsequently transformed back to the original domain in order to yield an estimate of the entire OFDM symbol. The transform may be a time-frequency transform, for example a Fourier transform, or a singular value decomposition (SVD).

In any case, all of the afore-mentioned estimators are applicable as the inventive filter (band pass filter or low pass filter) within the inventive channel estimation scheme.

If a scattered pilot grid is used (c.f. Fig. 4c), the received OFDM frame is sampled in two dimensions with rates $D_f/T$ and $D_t T_{sym}$ in frequency and time, respectively. In order to reconstruct the signal, there exists a maximum $D_f$ and $D_t$, dependent on the maximum delay of the channel, $\tau'_{max}$, and the maximum Doppler frequency $v_{max}$. By applying the sampling theorem, the following relation must be satisfied

$$\frac{D_f \tau'_{max}}{T} \leq 1 \qquad and \qquad v_{max} T_{sym} D_t \leq \frac{1}{2}$$

It is to be noted that CDD-OFDM does not have any effects on pilot spacing in time direction $D_t$. However, CDD effectively extends the maximum delay of the channel, which calls for a denser pilot spacing $D_f$, if a conventional SISO channel estimator is used. By recalling that the maximum effective delay of the CDD-OFDM system becomes $\tau'_{max} = \delta_{cyc} T_{spl}(N_T - 1) + \tau_{max}$, which may be several times larger than $\tau_{max}$. Especially, if $\delta_{cyc}$ becomes large, $D_f$ becomes significantly smaller. This means that more pilots are required, which degrades the spectral efficiency of the system.

In order to demonstrate the degradation in spectral efficiency, the following case study will be considered. The OFDM system parameters are chosen such that the maximum delay of the channel does not exceed the guard interval duration, $\tau_{max} \leq T_{GI}$. Furthermore, the OFDM symbol duration $T = N_{FFT} T_{spl}$ is chosen 5 to 20 times larger than $T_{GI}$ to provide a spectrally efficient system. Thus, $\tau_{max}$ can be upper bounded by $\tau_{max} \leq T_{GI} \leq N_{FFT} T_{spl} / 5$. For example, a preferred choice for the CDD delay parameter is $\delta_{cyc} = N_{FFT} / N_T$. Substituting the above approximations into the above equation, the pilot spacing in frequency can be lower bounded by

$$D_f \leq \left\lfloor \frac{1}{\frac{N_T - 1}{N_T} + \frac{1}{5}} \right\rfloor = \begin{cases} 5, & N_T = 1 \\ 1, & N_T \geq 2 \end{cases}$$

where $\lfloor x \rfloor$ is the largest integer equal to or smaller than x. Hence, if CDD-OFDM with delay $\delta_{cyc} = N_{FFT} / N_T$ is used, conventional SISO channel estimation utilizing a scattered pilot grid is not possible. Even if a grid with $D_f = 1$ is chosen, i.e. the grid where one entire OFDM training symbol is transmitted, as is indicated in Fig. 4a, the oversampling factor which is larger than 5 for the single antenna case is reduced to about 1.4 for $N_T \geq 2$, which may result in an increased channel estimation error.

In the following, the inventive improvement of conventional channel estimation schemes will be discussed in detail. By exploiting the DFT properties of CDD, a structure of the symbol transmitter unit as shown in Fig. 12 can be retained, while the receiver is able to utilize information about the cyclic delays, as has been discussed above.

The present invention further provides a virtual MISO pilot grid which can preferably be used with the conventional CDD-OFDM transmitter from Fig. 12. This imposes some constraints on the system parameters, which will be derived later. According to a further aspect of the present invention, the channel estimator structure can further be simplified. This, however, requires a cyclic delay of $\delta_{cyc}^{(\mu)} = (\mu - 1)T / N_T$.

In the following, the inventive utilizing the virtual MISO pilot grid for CDD-OFDM will be described.

The notation for the received CDD-OFDM signal allows two interpretations:

> 1. The received signal $Y_{\ell,i} = X_{\ell,i} H_{\ell,i} + N_{\ell,i}$ may be viewed as a SISO signal having the resulting CTF (the effective CTF) described above. The increased frequency selectivity has been shown to be a problem for a SISO channel estimator since the overhead due to the pilots is significantly increased.

> 2. The same received signal may be viewed as a MISO signal as well, so $Y_{\ell,i} = \sum_{\mu=1}^{N_T} X_{\ell,i}^{(\mu)} H_{\ell,i}^{(\mu)} + N_{\ell,i}$,

with the transmitted MISO signal $X_{\ell,i}^{(\mu)}$ described above. For MISO channel estimation, the inventive approach is to estimate all $N_T$ CTFs $H_{\ell,i}^{(\mu)}$. Then, the effective (resulting) CTF $H_{\ell,i}$ can be constructed by the means of, for example, superposition.

In the following, the latter case will be studied in the context of the channel estimation problem for CDD-OFDM. It is assumed that the cyclic delay parameter $\delta_{cyc}$ and a number of transmit antennas $N_T$ are known at the receiver. Generally, for MISO systems, it is allowed that every transmit antenna signal uses its own pilot, in order to enable the receiver to separate the superimposed signals

$$\tilde{Y}_{\ell,\tilde{i}} = \tilde{X}_{\ell,\tilde{i}}\tilde{H}_{\ell,\tilde{i}} + \tilde{N}_{\ell,\tilde{i}} = \sum_{\mu=1}^{N_T} \tilde{X}_{\ell,\tilde{i}}^{(\mu)}\tilde{H}_{\ell,\tilde{i}}^{(\mu)} + \tilde{N}_{\ell,\tilde{i}}.$$

The CDD-OFDM pilot $\tilde{X}_{\ell,\tilde{i}}^{(\mu)}$ located at sub-carriers $i = \tilde{i}D_f$ and OFDM symbols $\ell = \tilde{\ell}D_r$ is in the form

$$\tilde{X}_{\ell,\tilde{i}}^{(\mu)} = \tilde{X}_{\ell,\tilde{i}}e^{-j2\pi\tilde{i}D_f\cdot(\mu-1)\delta_{cyc} / N_{FFT}} = \tilde{X}_{\ell,\tilde{i}}e^{-j\tilde{i}\varphi(\mu)}$$

where $\varphi(\mu) = 2\pi D_f \cdot (\mu - 1)\delta_{cyc}/N_{FFT}$ defines the phase increments between adjacent pilots of the pilot sequence p. The phase term appearing in the above equations, $e^{-j\tilde{i}\varphi(\mu)}$ defines the previously mentioned phase shift sequence. By realising that $\tilde{X}_{\ell,\tilde{i}}^{(\mu)}$ has the form of a phase shifted pilot sequence, known channel estimation techniques for OFDM with multiple transmit antennas can be applied to channel estimation. Channel estimation schemes for OFDM with multiple transmit antennas are described, for example, in Y. Li, N. Seshadri, and S. Ariyavisitakul, "Channel Estimation for OFDM Systems with Transmitter Diversity in Mobile Wireless Channels," IEEE Journal of Selected Areas on Communications, vol. 17, pp. 461-470, Mar. 1999.

In mathematical terms, the demodulated pilots $\tilde{H}_{\ell,\tilde{i}}$ are used. In order to obtain a channel estimate in frequency direction, i.e. an OFDM symbol containing pilot symbols, $N_t$ estimators $W_m^{(\mu)}$ (the inventive filters) each matched to the particular pilot shifts $e^{-j\tilde{i}\varphi(\mu)}$ defining the pilot shift sequence are required to provide the channel estimate for transmit antenna $\mu$

$$\hat{H}_{\ell,i}^{(\mu)} = \sum_{m=0}^{M_f-1} W_m^{(\mu)} \cdot \tilde{H}_{\ell,\tilde{i}-m} = \sum_{m=0}^{M_f-1} W_m^{(\mu)}\left\{\sum_{\mu=1}^{N_T} H_{\ell,\tilde{i}-m}^{(\mu)} \cdot e^{-j\tilde{i}\varphi(\mu)} + \tilde{X}_{\ell,\tilde{i}-m}^{*}\tilde{N}_{\ell,\tilde{i}-m}\right\}$$

Subsequently, an estimate of the effective (resulting) CTF $\hat{H}_{\ell,i}$ is obtained by

$$\hat{H}_{\ell,i} = \sum_{\mu=1}^{N_T} \hat{H}_{\ell,i}^{(\mu)} \cdot e^{-ji\varphi(\mu) / D_f}.$$

This case corresponds to the inventive scenario where the inventive base band filter simultaneously performs filtering and down conversion. Afterwards, a processing of the base band representations of the channel transfer functions is performed by compensating the influence of $D_f$ as has been described above. In the same step, an up conversion can be performed, i.e., the processed channel transfer functions are multiplied by associated phase shift sequences.

The complexity of the estimator is approximately $N_T M_f$ multiplications per sub-carrier, which results in about $N_T$ times the complexity of a comparable SISO estimator. This is motivated by the fact that $N_t$ signals which are in general mutually independent have to be estimated. In accordance with the previously described SISO channel estimators 2×1D PACE algorithms can be applied if a scattered pilot grid is used.

In accordance with a further aspect of the present invention, rearranging the above equations yields

$$\hat{H}_{\ell,i} = \sum_{m=0}^{M_f-1} \breve{H}_{\tilde{\ell},\tilde{i}-m} \underbrace{\sum_{\mu=1}^{N_T} W_m^{(\mu)} \cdot e^{-ji\varphi(\mu)/D_f}}_{W_m} .$$

The resulting coefficients $W_m = \sum_{\mu=1}^{N_T} W_m^{(\mu)} \cdot e^{-ji\varphi(\mu)/D_f}$, $0 \leq m < M_f$ are sufficient to estimate the effective CTF.

It is to be noted, that if $\hat{H}_{\ell,i}$ is to be estimated rather than the CTF of the individual transmit antennas $\hat{H}_{\ell,i}^{(\mu)}$, then it is computationally more efficient to pre-compute coefficients of the band-pass filter $W_m$ and to perform the above computation, instead of computing the two above equations successively.

The above simplification results from a linear combination of the band-pass filters $\{ W_m^{(\mu)} \}$ providing the filter $W_m$. Based on this simplifications, a channel estimator's complexity at a receiver can further be reduced since only $M_f$ multiplications per sub-carrier are to be performed, instead of $N_T M_f$ multiplications, wherein the result is exactly the same.

In accordance to the SISO channel estimators, 2D and 2×1D PACE algorithms can be applied if a scattered pilot grid is used.

The pilot spacing of MISO-OFDM channel estimator is bounded by

$$D_f N_T \tau_{max} / T \leq 1$$

It is seen that the overhead due to pilot symbols increases proportionally with the number of transmit antennas. Compared to the SISO estimator with a maximum pilot spacing bounded by the above-mentioned formula, the overhead due to the pilot symbols for the MISO estimator becomes less if $\delta_{cyc} T_{spl} > \tau_{max}$. In other words, for large cyclic delays MISO channel estimation is more efficient in terms of pilot overhead.

In the following, the necessary conditions for the inventive virtual MISO pilot grid will be described. The virtual MISO pilot sequences $\tilde{X}_{\tilde{\ell},\tilde{i}}^{(\mu)}$ are dependent on $\delta_{cyc}$ and the pilot spacing $D_f$. So, if both $\delta_{cyc}$ and $D_f$ are fixed, it may not be possible to estimate the $N_T$ different channel. The reason is that each transmit antenna's channel requires a unique pilot sequence in order to distinguish the $N_T$ channels. In other words, phase ambiguities must be avoided. In mathematical terms, the phase term $\varphi(\mu)$ between adjacent pilots $\tilde{X}_{\tilde{\ell},\tilde{i}}^{(\mu)}$ should be different for all $\mu = \{1, \cdots, N_T\}$. Hence, the following condition must hold

$$\varphi(\mu) \neq \varphi(m) + k2\pi \quad \text{for} \quad \mu \neq m; \quad \mu, m = \{1, \cdots, N_T\}; \quad k \in Z$$

where k is an arbitrary integer. Solving the above condition for k and substituting the expression for $\varphi(\cdot)$ yields

$$k \neq \frac{\delta_{cyc} \cdot (\mu - m) \cdot D_f}{N_{FFT}} \quad \text{for} \quad \mu \neq m; \quad \mu, m = \{1, \cdots, N_T\}$$

The above condition specifies phase ambiguities of pilot symbols, which must be avoided. This imposes a constraint on the design of $\delta_{cyc}$ and $D_f$. For a given cyclic delay $\delta_{cyc}$, the pilot spacing $D_f$ cannot be chosen arbitrarily, and vice versa.

In the following, a sufficient condition to provide a set of optimum phase shifted pilot sequences will be derived. The estimator performance is dependent on pilot sequence design. Moreover, the estimator performance is optimum if the periodicity of the phase shifted pilot sequences $\widetilde{X}_{\ell,\tilde{i}}^{(\mu)}$ is $N_T$. This means that $\varphi(\mu)$ mod $2\pi$ has exactly $N_T$ constellation points. Hence, a set of $N_T$ optimum phase shifted pilot sequences according to the present invention, $e^{-j\theta_i(n)}$, appropriate to estimate $N_T$ superimposed signals is defined by

$$\theta_i(n) = i n \cdot \frac{2\pi}{N_T} = i \cdot \theta(n) \quad \text{with} \quad n = \{0, \cdots, N_T - 1\}$$

where i denotes the sub-carrier index and $\theta(n) = n 2\pi / N_T$ denotes the phase increment between two adjacent sub-carriers. The possible realisations of $\theta_i(n)$ mod $2\pi = \theta(n)$ are $N_T$ distinct phases given by

$$P \overset{\Delta}{=} \left\{ 0, \frac{2\pi}{N_T}, 2 \cdot \frac{2\pi}{N_T}, \cdots, (N_T - 1) \cdot \frac{2\pi}{N_T} \right\}$$

which corresponds to a $N_T$-PSK constellation.

Generally, if the phase increment between adjacent pilots $\varphi(\mu)$ can be uniquely mapped to exactly $N_T$ distinctive phases within the unit circle $\theta(n) \in P$ with $n = \{0, \cdots, N_T - 1\}$, a sufficient condition for an optimum set of phase shifted pilot sequences is obtained. This leads to a condition for $D_f$ to yield the optimum pilot grid

$$\varphi(\mu) = \theta(n) + k 2\pi \quad \text{for} \quad \mu = \{1, \cdots, N_T\}, \quad \theta(n) \in P, \quad k \in Z$$

where k is an arbitrary integer. The above equation states that $\varphi(\mu)$ and multiples of 2n are within the set P so an equivalent notation is $\varphi(\mu)$ mod $2\pi \in P$. It is to be noted that the above equation is always satisfied for $\mu=1$ and n=0. However, the above equation must hold for all $\mu = \{1, \cdots, N_T\}$. Furthermore, the $N_T$ realizations of $\varphi(\mu)$ must uniquely map all $N_T$ constellation points of P.

In order to identify possible values for $\delta_{cyc}$ and $D_f$, the above equation can be used. However, there is an easier way for obtaining the above-mentioned values, which can be motivated by considering $k\varphi(\mu)$ for an arbitrary integer k. Furthermore, if the above equation is satisfied, then $k\varphi(\mu)$ mod $2\pi \in P$, i.e., multiples of $\varphi(\mu)$ are also within P.

The condition of the above equation can be reformulated to

$$\varphi(\mu) \overset{\Delta}{=} \frac{2\pi D_f \cdot (\mu - 1) \cdot \delta_{cyc}}{N_{FFT}} = \frac{2\pi k \cdot (\mu - 1)}{N_T} \quad \text{with} \quad k \overset{\Delta}{=} \frac{N_T D_f \delta_{cyc}}{N_{FFT}} \in Z$$

in order to avoid phase ambiguities of the pilots, the greatest common divisor (GCD) of (k, $N_T$) is preferably not larger than 1. This yields to a sufficient condition to provide a set of $N_T$ optimum phase shifted pilot sequences in accordance with the present invention

$$GCD(k, N_T) = 1 \quad \text{with} \quad k \stackrel{\Delta}{=} \frac{N_T D_f \delta_{cyc}}{N_{FFT}} \in Z$$

The above condition gives possible values for $D_f$ if $\delta_{cyc}$ is given, which is

$$D_f = \frac{k N_{FFT}}{N_T \delta_{cyc}} \quad \text{with} \quad GCD(k, N_T) = 1.$$

The present invention provides in accordance with a further aspect a concept for a simplified channel estimation for CDD-OFDM with maximum cyclic delay.

In the following, the cyclic delay will be set to $\delta_{cyc} = N_{FFT}/N_T$. This is the maximum possible cyclic delay in the way that the mutual delay between all transmit antennas is maximized. As has been mentioned above, the maximum cyclic delay is the optimum choice for CDD-OFDM. Fortunately, this choice of the cyclic delay allows to grossly simplify the channel estimator complexity. This is particularly true for the $N_T=2$ transmit antenna systems, which may be the most practical choice for CDD.

In the following, the effective channel transfer function (resulting CTF) will be considered, which becomes

$$H_{\ell,i} = \sum_{\mu=1}^{N_T} H_{\ell,i}^{(\mu)} e^{-j2\pi i \cdot (\mu-1)/N_T} = \sum_{\mu=1}^{N_T} H_{\ell,i}^{(\mu)} e^{-ji\varphi(\mu)}$$

The phase term $\varphi_i(\mu) = i\varphi(\mu) = 2\pi i \cdot (\mu - 1)/N_T$ defining the phase shift sequence has some interesting properties:

1. All possible realizations of $\varphi i(\mu)$ can be mapped onto $N_T$ distinctive points on the unit circle, denoted by the set P.
2. The phases $\varphi_i(\mu)$ are equivalent to phase shifted pilot sequences. Phase shifted pilot sequences are a set of $N_T$ orthogonal pilot sequences which minimize the estimation error.

3. The correlation function in frequency direction, $R'_{HH}[\Delta i]$, becomes

$$R'_{HH}[\Delta i] = \sum_{\mu=1}^{N_T} e^{-j 2\pi \Delta i \cdot [\mu-1]/N_T} \cdot R_{HH}^{\prime(\mu)}[\Delta i]$$

In the following, it is supposed that the power delay profile of all $N_T$ channels is similar, so $R_{HH}^{\prime(\mu)}[\Delta i] \approx R_{HH}^{\prime(m)}[\Delta i]$. Then, $R_{HH}^{\prime(\mu)}[\Delta i]$ can be pulled out of the summation, and with $\sum_{\mu=1}^{N_T} e^{-j 2\pi \Delta i \cdot [\mu-1]/N_T} = 0$ for $\Delta i = \{1, \cdots, N_T\}$, the resulting correlation function $R'_{HH}[\Delta i]$ becomes uncorrelated for $N_T-1$ adjacent sub-carriers.

Substituting the cyclic delay $\delta_{cyc} = N_{FFT}/N_T$, the virtual MISO or pilot sequence can be rewritten to

$$\widetilde{X}_{\widetilde{\ell},i}^{(\mu)} \;=\; \widetilde{X}_{\widetilde{\ell},\widetilde{i}}\,e^{-j2\pi\widetilde{i}D_f\cdot(\mu-1)/N_T} \;=\; \widetilde{X}_{\widetilde{\ell},\widetilde{i}}\,e^{-j\widetilde{i}\varphi(\mu)} \qquad \text{with}\quad i \;=\; \widetilde{i}D_f$$

where $\varphi(\mu) = 2\pi D_f\,(\mu - 1)/N_T$ denotes the phase shift between adjacent pilot of the pilot sequence $\mu$. It can be verified that for a pilot spacing $D_f = 1$, i.e., a whole OFDM training symbol is transmitted, $\widetilde{X}_{\widetilde{\ell},i}^{(\mu)} = \widetilde{X}_{\widetilde{\ell},\widetilde{i}}\,e^{-j2\pi i\cdot(\mu-1)/N_T}$ constitutes a set of $N_T$ phase shifted pilot sequences.

However, this is not the only solution for $D_f$ where an optimum set of $N_T$ phase shifted pilot sequences are obtained. Generally, substituting $\delta_{cyc} = N_{FFT}/N_T$ yields a condition for the pilot spacing $D_f$

$$GCD(D_f,\,N_T) \;=\; 1$$

with the expressions for $H_{\ell,i}$ given above and the constraints for $D_f$, it is possible to simplify channel estimation for CDD-OFDM. With the cyclic delay set to $\delta_{cyc} = N_{FFT}/N_T$, $N_T$ adjacent sub-carriers are grouped into $N_T$ sets. That is, the grouping into sets is specified by the modulo operation $m = i\bmod N_T$. In the following, the $n^{\text{th}}$ entry of set $m$ of OFDM symbol 1 defined by

$$G_{\ell,n}^{(m)} \overset{\Delta}{=} H_{\ell,m+nN_T} \;=\; \sum_{\mu=1}^{N_T} H_{\ell,m+nN_T}^{(\mu)} e^{-j2\pi\cdot(m+nN_T)\cdot(\mu-1)/N_T}, \qquad m \overset{\Delta}{=} i \bmod N_T$$

$$=\; \sum_{\mu=1}^{N_T} H_{\ell,m+nN_T}^{(\mu)} e^{-j2\pi\,m\cdot(\mu-1)/N_T} \qquad\qquad n \overset{\Delta}{=} \left\lfloor \frac{i}{N_T} \right\rfloor$$

is defined, where each set contains $N_C/N_T$ entries, $\{G_{\ell,n}^{(m)}\}$, $n = \{0, \cdots, N_c/N_T - 1\}$. It is to be noted that the induced phase term of CDD has become independent on $n$, since any terms dependent on $n$ are multiple of $2n$ and can thus be neglected. Each set is identified through the same phase term $\psi(m,\,\mu) = 2\pi m\cdot(\mu - 1)/N_T$. Then, $\psi(m,\,\mu)$ can be regarded as a constant with respect to $n$ within the $n^{\text{th}}$ set. Hence, $\{G_{\ell,n}^{(m)}\}$, $n = \{0, \cdots, N_C/N_T - 1\}$ is the superposition of $N_T$ CTF multiplied by a constant phase term. This means that the artificial frequency selectivity induced by CDD has been compensated.

The basic inventive idea associated with the simplified channel estimation scheme is not to estimate the channel transfer function for each transmit antenna, $H_{\ell,i}^{(\mu)}$ separately, but to estimate $G_{\ell,n}^{(m)}$ separately for each set, in the way that only the pilots, which are also within the $m^{\text{th}}$ set are used. The estimation of $G_{\ell,n}^{(m)}$ for set $n$ is equivalent to estimate a SISO channel. The only difference is that only pilots are used which fall into the set $m$. Fortunately, a subset of pilots denotes by $\widetilde{G}_{\ell,n}^{(m)}$ will be within each set if the above equation is satisfied. Since there are $N_T$ time sets, the efficient pilot spacing increases $D_f' \;=\; N_T D_f$, which effectively means that $N_T$ times more pilots are required compared to an equivalent SISO system. This is the same pilot overhead as for the true MISO estimator. The complexity, however, is the same as for a simple SISO channel estimator.

The maximum pilot spacing of the inventive technique is according to the sampling theorem

$$D_f \leq \frac{T}{N_T \, \max_{\mu}\{\tau_{\max}^{(\mu)}\}}$$

where $\max_{\mu} \tau_{\max}^{(\mu)}$ is the maximum delay of the $N_T$ superimposed channel $G_{\ell,n}^{(m)}$, which is determined by the total maximum of the individual maximum channel delays. Assuming that all channels have a similar maximum delay $\tau_{\max} \approx \tau_{\max}^{(\mu)}$, the max operation above may be omitted. In comparison to the required pilot spacing for the conventional SISO estimator, the inventive simplified estimator is more efficient if

$$\tau_{\max} < \delta_{cyc} T_{spl}$$

which for $\delta_{cyc} = N_{FFT}/N_T$ will be most often achieved in practice, since CDD is most practical for low $N_T$.

In the following, an implementation of the inventive simplified channel estimator for CDD-OFDM will be discussed.

By the way of example, a pilot grid where the pilots in frequency are spaced $D_f$ sub-carriers apart is considered. A sub-carrier containing a pilot is determined by $i = D_f \tilde{i}$ where $\tilde{i} = \{(0,\cdots,\lfloor N_c/D_f \rfloor -1\}$ is the pilot index. If the above condition for the pilot spacing holds, then every $N_T$th pilot will fall in the same set. Hence, pilot positions for set m are determined by 250. With the definition for 251 for the pilots 252 as 253 with 254 is obtained. For the estimation of the $m^{th}$ set a 1D, 2D or 2×1D SISO channel estimator, as described above, respectively, with pilot spacing 255 can be applied.

The inventive channel estimator operates as follows. Firstly, the modulation of the pilot symbols is removed. The $n^{th}$ demodulated pilot of set m is in the form

$$\breve{G}_{\tilde{\ell},\tilde{n}}^{(m)} = \breve{H}_{\tilde{\ell},\tilde{n}N_T+m} = \tilde{X}_{\tilde{\ell},\tilde{n}N_T+m}^{*} \tilde{Y}_{\tilde{\ell},\tilde{n}N_T+m} .$$

Channel estimation of a symbol belonging to set m is performed by only using pilots which are also in that set. This is the difference to conventional SISO channel estimation. Considering 1D channel estimation, the channel estimator of sub-carrier $i = m + nN_T$ becomes

$$\hat{G}_{\ell,n}^{(m)} = \hat{H}_{\ell,m+nN_T} = \sum_{k=0}^{M_f-1} W_k' \cdot \breve{G}_{\ell,\tilde{n}-k}^{(m)} = \sum_{k=0}^{M_f-1} W_k' \cdot \breve{H}_{\ell,(\tilde{n}-k)N_T+m}$$

$$= \sum_{k=0}^{M_f-1} W_k' \left\{ \sum_{\mu=1}^{N_T} H_{\ell,(\tilde{n}-k)N_T+m}^{(\mu)} e^{-j2\pi \, m\cdot(\mu-1)/N_T} + \eta_{\tilde{\ell},(\tilde{n}-k)N_T+m} \right\}$$

where $\eta_{\tilde{\ell},(\tilde{n}-k)N_T+m} = \tilde{X}_{\tilde{\ell},(\tilde{n}-k)N_T+m}^{*} \tilde{N}_{\tilde{\ell},(\tilde{n}-k)N_T+m}$ is the AWGN (average white Gaussian noise) term. The extension to 2D and 2×1D channel estimation schemes is straight forward.

The computational complexity of the inventive algorithm for the 1D estimator is $M_f$ multiplications per sub-carrier, where $M_f$ is the filter order of the inventive filter. This is the same as for the conventional SISO estimator. The MISO estimator described above has a $N_T$ times higher complexity. The performance of the inventive estimator is dependent on the chosen estimator and on the channel characteristics. However, it is to be noted that if the power delay profiles of all $N_T$ channels are similar, $N_T$ adjacent sub-carriers become de-correlated, as has been shown above, which corresponds t the grouping of the sets. So, nothing is lost if pilots are neglected which belong to adjacent sets since they are uncorrelated anyway. In this case, the inventive estimator approaches the performance of the MISO estimator at significantly lower computational cost.

In the following, by the way of example only, a CDD-OFDM system with $N_T=2$ transmit antennas will be considered, which is the preferable system set-up for CDD-OFDM, as has been mentioned above. In this case, the following simplification is obtained

$$G_{\ell,n}^{(m)} \overset{\Delta}{=} H_{\ell,m+2n} = H_{\ell,m+2n}^{(1)} + H_{\ell,m+2n}^{(2)}(-1)^m, \qquad m = i \bmod 2 \in \{0,1\}$$
$$n = \left\lfloor \tfrac{i}{2} \right\rfloor$$

It is seen that the CTF of antenna $\mu=1$ has no phase distortion while CTF of antenna $\mu=2$ oscillates between 1 and -1. For even and odd sub-carriers, the following is obtained

$$G_{\ell,n}^{(0)} = H_{\ell,2n}^{(1)} + H_{\ell,2n}^{(2)}, \qquad m = 0$$

$$G_{\ell,n}^{(1)} = H_{\ell,2n+1}^{(1)} - H_{\ell,2n+1}^{(2)}, \qquad m = 1$$

In other words, the simplified channel estimator scheme provides directly an estimate of the effective channel transfer function.

Preferably, an odd pilot spacing is required, since the greatest common divisor of $(D_f,2)$ becomes one in this case. Then, one pilot belonging to set m=0 is followed by a pilot belonging to set m=1.

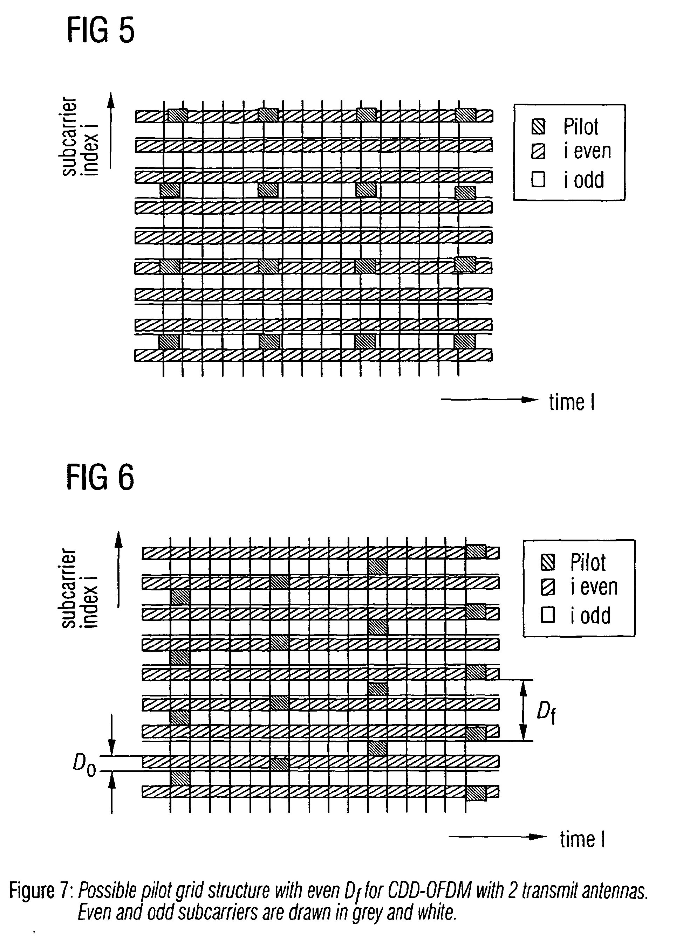

Fig. 5 shows an inventive pilot grid structure for CDD-OFDM with two transmit antennas.

As is shown in Fig. 5, two successive pilots occupy even and odd sub-carriers, respectively. For estimating the channel transfer function on the even and on the odd sub-carriers only pilots are used which are located on even and on odd sub-carriers, respectively.

In the following, some inventive modifications for channel estimation for CDD-OFDM with maximum cyclic delay will be described.

If the cyclic delay parameter $\delta_{cyc}$ is to be chosen arbitrarily, some constraints on the pilot spacing $D_f$ are imposed. For instance, for $\delta_{cyc} = N_{FFT}/N_T$ and $N_T = 2$, the pilot spacing $D_f$ must be odd.

However, these constraints limit a flexibility of the resulting systems. The present invention additionally provides a concept for relaxing the requirements for $D_f$.

In the following, the system described above with 266 will be considered, by the way of example only. By imposing an offset parameter for the pilot grid arbitrary $D_f$ can be supported. In this approach as shown in Fig. 6 for the example of $N_T=2$ transmit antennas. By shifting the start of the first pilot by an odd number Do, the channel can be estimated even if $D_f$ is even.

Sometimes a shift by Do of the start of the pilot grid may also not be desirable. In such a case, the transmitter can be slightly modified in accordance with a further aspect of the present invention.

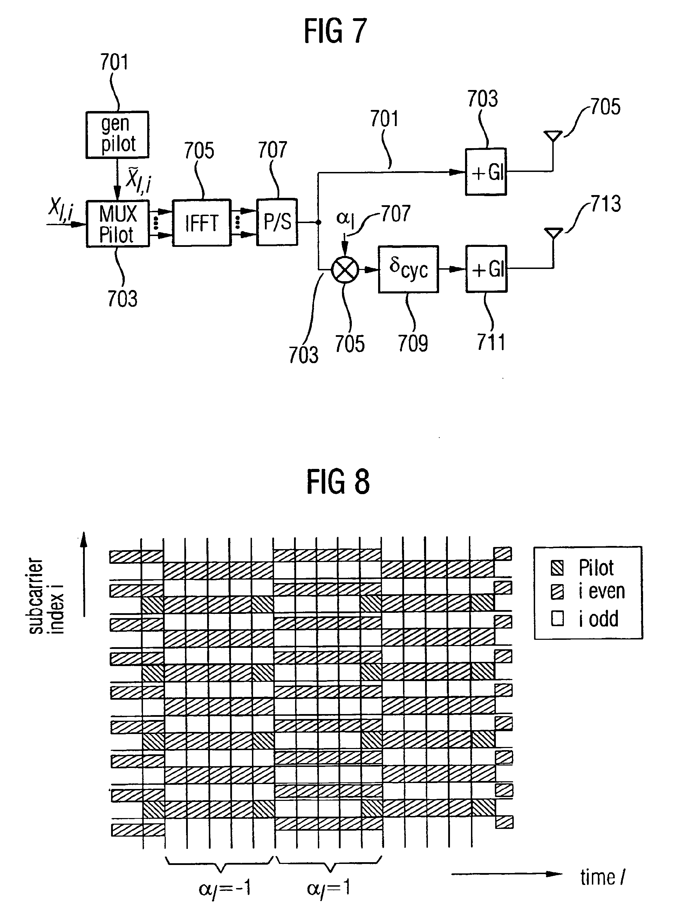

Fig. 7 shows a block diagram of an inventive CDD-OFDM transmitter which can support even pilot spacings $D_f$.

The inventive CDD-OFDM transmitter of Fig. 7 comprises a pilot generator 701 coupled to a multiplexer 703. The multiplexer 703 has an input for receiving data sequence and a plurality of outputs coupled to an IFFT transformer 705. The IFFT transformer 705 has a plurality of outputs coupled to a parallel-to-serial converter 707 (P/S) .A signal path determined by an output of the parallel-to-serial converter 707 is divided into a first signal path 709 and a second signal path 711.

The first signal path 709 is coupled to a guard insertion block 713 having an output coupled to a first transmit antenna 715.

The second signal path 711 is coupled to an input of a multiplier 717, the multiplier 717 having a further input 719 and an output coupled to a delay element 721. The delay element 721 is coupled via a guard insertion block 723 to a second transmit antenna 725.

The inventive transmitter shown in Fig. 7 differs from the CDD-OFDM transmitter shown in Fig. 12 by a multiplication with an antenna dependent complex constant $\alpha_1^{(\mu)}$ provided to the further input 719 of the multiplier 717. In accordance with the present invention, the antenna dependent complex constant changes once every $D_T$ OFDM symbols. For maximum cyclic delays $\delta_{cyc} = N_{FFT} / N_T$, a possible value for this complex constant is

$$\alpha_{l}^{(\mu)} = e^{-j2\pi(\mu-1)/N_T\lfloor l/D_t\rfloor}.$$ For the example with $N_T=2$ and an even $D_f$, the antenna dependent constant may

be set $\alpha_{l}^{(1)} = 1$ for the first antenna 715 and $\alpha_{l}^{(2)} = (-1)^{\lfloor l/D_t\rfloor} = \{\pm 1\}$ for the second antenna 725.

The effect on the received signal is demonstrated in Fig. 8 showing the inventive pilot grid structure with even $D_f$.

In accordance with the present invention, even and odd sets are shifted by one sub-carrier every $D_T$ OFDM symbols, which effectively is having the same effect as a shift of the pilots by $D_0$. It is to be noted that $\alpha_{l}^{(\mu)}$ is a constant for $D_T$ OFDM symbols. Furthermore, for two transmit antennas, $\alpha_{l}^{(2)}$ only negates the input sequence on the second antenna, that means that a sign of input sequence values is converted.

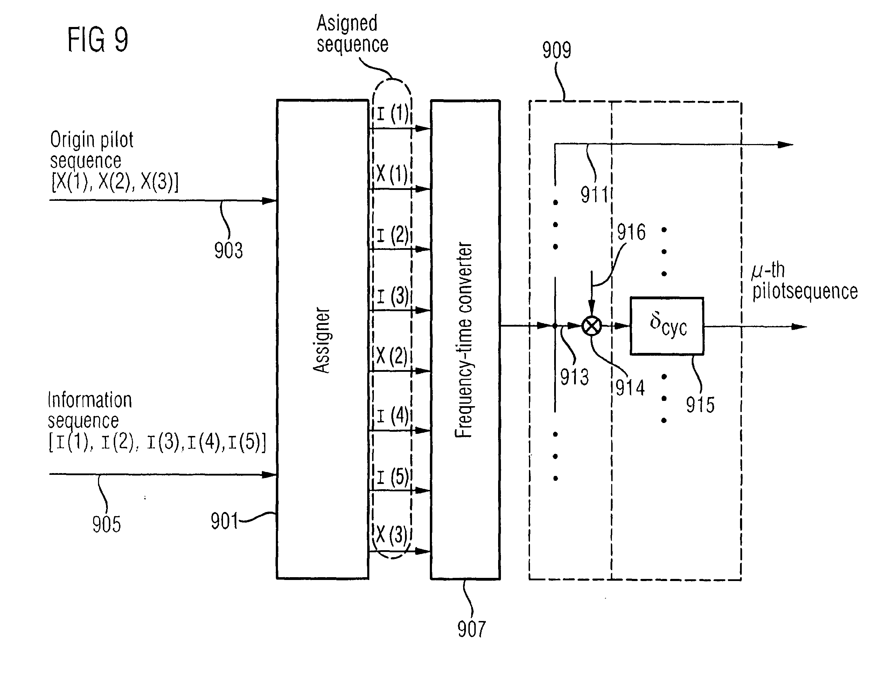

Fig. 9 shows a block diagram of the inventive apparatus for generating $N_T$ pilot sequences. The apparatus comprises an assigner 901 having a first input 903 and a second input 905. The assigner 901 has a plurality of outputs coupled to a frequency-time converter 907. The frequency-time converter 907 has an output coupled to a means 909 for providing a $\mu^{th}$ copy of a converted sequence provided by the frequency-time converter 907. The means for providing the $\mu^{th}$ copy is operative for dividing a signal path defined by the output of the frequency-time converter 907 into a plurality of signal paths, wherein in Fig. 9, by the way of example only, a first signal path 911 and a $\mu^{th}$ signal path 913 are depictive. The $\mu^{th}$ signal path 913 is coupled to a means 915 for cyclically delaying (delay element) which has an output.

The apparatus shown in Fig. 9 is operative for processing an information signal provided via the second input 905 and the origin pilot sequence provided via the first input 903 in accordance with a cyclic delay diversity scheme, wherein both sequences are depicted in Fig. 9. By the way of example only, in Fig. 9 the case of $D_f = 3$ is considered. As is depicted in Fig. 9, the subsequent values of the origin pilot sequence are assigned to every $D_f^{th}$ sub-carrier, wherein the successive values of the information sequence are assigned to the remaining sub-carriers. In other words, the inventive assigner 901 performs a multiplexing operation. As is shown in Fig. 9, the assigned sequence is provided via the plurality of outputs of the assigner 901. After time-frequency conversion and an optional parallel-to-serial conversion, a plurality of copies of the converted sequence are provided.

It is to be noted that the inventive apparatus shown in Fig. 9 may also be operative for assigning only subsequent values of the origin pilot sequence. In this case, $D_f = 1$.

As is depicted in Fig. 9, the converted sequence is common to all $N_T$ pilot sequences. In other words, the inventive apparatus is operative for providing a plurality of pilot sequences from a single origin pilot sequence using a single time-frequency converter, which can be for example a single Fourier transformer, for example an IFFT transformer being operative for performing a single IFFT transform. For example, the means 909 for providing the $\mu^{th}$ copy may be operative for providing a plurality of copies of the converted sequence, as is depicted in Fig. 9. By the way of example only, the means 909 for providing the $\mu^{th}$ copy may be operative for providing the converted sequence for a first copy of the converted sequence as a first pilot sequence of $N_t$ pilot sequences and, simultaneously, for providing the $\mu^{th}$ copy of the converted sequence to be used for providing the $\mu^{th}$ pilot sequence.

As it is depicted in Fig. 9, the $N_T$ pilot sequences are based on the same origin pilot sequence or, in other words, are derived from the same converted sequence. In order to provide pilot sequences from the same converted sequence so that received version of the pilot sequences are separable at a receiver, the copies of the converted sequence are processed in such a way, that spectral representations of the resulting pilot sequences occupy different spectral regions, as has been mentioned above. For example, a spectral representation of the $\mu^{th}$ pilot sequence occupies a band-pass spectral region, and the spectral representation of the first pilot sequence occupies a base band spectral region or a further band-pass region, so that both spectral regions do not overlap. As has been explained above, this characteristic can be exploited by the inventive channel estimator, wherein a simple band-pass filter applied for filtering the spectral representations may be used in order to obtain channel estimates.

In order to provide separable training sequences, the presented invention applies predetermined cyclic delays. Optionally, different pilot spacings $D_f$ can be used. To be more specific, the inventive means 915 for cyclically delaying is operative for cyclically delaying the $\mu^{th}$ copy of the converted sequence by a delay value which is dependent on $D_f$, or wherein the assigner is operative for using a pilot spacing being dependent on the cyclic delay value. In other words, $D_f$ depends on the delay factor.

In accordance with the present invention, the delay factor or $D_f$ are chosen such that, for example a spectral representation of the $\mu^{th}$ pilot sequence is multiplied by a phase shift sequence, for example +1, -1 etc., which introduces the up-converting effect described above.

More specifically, the means 915 for cyclically delaying is operative for cyclically delaying the $\mu^{th}$ copy of the converted sequence by a delay factor which may be obtained from the following equation

$$\delta_{cyc}^{(\mu)} = N_{FFT}\varphi(\mu) / 2\pi D_f(\mu - 1)$$

to obtain the $\mu^{th}$ pilot sequence, wherein

$$\varphi(\mu) \bmod 2\pi \; \in \; \left\{ 0, \frac{2\pi}{N_T}, 2 \cdot \frac{2\pi}{N_T}, \cdots, (N_T - 1) \cdot \frac{2\pi}{N_T} \right\}$$

or wherein the inventive assigner 901 is operative for assigning subsequent values of the origin pilot sequence to every $D_f^{th}$ sub-carrier, wherein $D_f$ is obtained from the following equation

$$D_f = \frac{kN_{FFT}}{N_T \delta_{cyc}}$$

wherein k is chosen such that a greatest common divisor GCD is

$$GCD(k, N_T) = 1$$

For example, the delay factor is fixed. In this case, the inventive assigner 901 may be operative for choosing $D_f$ such that, as a result, a spectral representation of the $\mu^{th}$ pilot sequence is, for example, up-converted to the band-pass spectral region.

For a fixed $D_F$, the inventive means 915 for cyclically delaying may operative for delaying the $\mu^{th}$ copy of the converted sequence such that a spectral representation of the $\mu^{th}$ pilot sequence occupies, by the way of example only, the previously mentioned band-pass spectral region.

In accordance with a further aspect of the present invention, the inventive assigner 901 and the inventive means 915 for cyclically delaying may cooperate with each other. To be more specific, the assigner 901 and the means 915 for cyclically delaying may adjust $D_f$ and the delay value such that the desired effect is introduced even if possible values for $D_f$ and possible values for the cyclic delay value are limited.

Referring again to the embodiment of Fig. 6 $D_f$ may be even, which is associated with the above mentioned problems. In order to cover both, even numbered and odd-numbered sub-carriers, the inventive assigner 901 may be operative for assigning subsequent values of the origin pilot sequence to every $D_f^{th}$ sub-carrier starting with, for example, an odd-numbered sub-carrier at a time-instant, at which pilots are transmitted, and for assigning the subsequent values of the origin pilot sequence to every $D_f^{th}$ sub-carrier starting with an even-numbered sub-carrier at a following time-instant, at which further are transmitted, or vice versa. In other words, the inventive assigner 901 introduces a numbering shift, so that the pilots are assigned to even and odd sub-carriers at different time-instants.

Referring again to the embodiment of Fig. 7, the means 909 for providing the $\mu^{th}$ copy may comprise the multiplier 717 for multiplying the $\mu^{th}$ copy of the converted sequence by a multiplying factor to provide a multiplied copy as the $\mu^{th}$ copy of the converted sequence. As has been explained above, the multiplying factor may be antenna dependent, i.e., dependent on a numbering index associated with, for example, the $\mu^{th}$ copy. For example, the numbering index may be equal to $\mu$. In other words, the effect depicted in Fig. 8 is introduced, as has been explained above. More specifically, the multiplier may be operative for multiplying the $\mu^{th}$ copy of the converted sequence to obtain the $\mu^{th}$ pilot sequence to be transmitted at a $1^{th}$ time instant by the multiplying factor

$$\alpha_1^{(\mu)} \; = \; e^{-j2\pi(\mu-1) / N_T \lfloor 1 / D_t \rfloor}$$

wherein $D_t$ denotes a time spacing between the $1^{th}$ time instant and a $(1+1)^{th}$ time instant.

The delay element 915 is, as has been explained above, operative for cyclically delaying the multiplied copy in order to provide the $\mu^{th}$ pilot sequence. The delay element 915 can be a cyclic shift element.

In accordance with the present invention, the inventive filters do not need to be tuned to a certain carrier frequency, so that only one set of filters is required instead of $N_T$ sets of filters. Moreover, if all transmit antennas have a similar power delay profile, a correlation from other sets is zero so that no performance degradation appears.

Depending on certain implementation requirements of the inventive methods, the inventive methods can be implemented in hardware or in software. The implementation can be performed using a digital storage medium, in particular a disk or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods, when the computer program product runs on a computer. In other words, the inventive methods are, therefore, a computer program having a program code for performing the inventive methods, when the computer program runs on a computer.

**Claims**

1. Channel estimator for estimating an effective channel from a receive sequence, the receive sequence including a superposition of $N_T$ pilot sequences being transmittable from $N_T$ transmitting points through $N_T$ communication channels to a receiving point, wherein $N_T$-1 pilot sequences are modulated versions of a first pilot sequence generated using a cyclic delay diversity transmission scheme, wherein the effective channel comprises a superposition of the $N_T$ channels extending from the $N_T$ transmitting points to the receiving point, the channel estimator comprising:

   a time-frequency converter (201) for converting a time-domain input signal into a spectral representation, the spectral representation being the receive sequence;
   a selector (101) for providing one or more sets of selected values, wherein the selector (101) is operative for providing a $m^{th}$ set of selected values of the one or more sets of selected values by selecting every $(DN_T)^{th}$ value from a set of values comprised by the receive sequence starting with a $m^{th}$ value in the set of values, the mth value including pilot information, wherein D denotes a pilot spacing;
   a filter (105) for filtering the $m^{th}$ set of selected values to provide a $m^{th}$ set of filtered values comprising an estimate of the effective channel at points associated with the $m^{th}$ set of filtered values.

2. Channel estimator according to claim 1, wherein the receive sequence comprises a number of subsequent receive sequence values, wherein every $D^{th}$ receive sequence value comprises pilot information determined by values of $N_T$ pilot sequences, wherein the filter (105) is an interpolation filter for interpolating between subsequent values in the $m^{th}$ set of selected values comprising pilot information for providing a $m^{th}$ interpolated set of values comprising interpolated values between subsequent values of the $m^{th}$ set of selected values, wherein the filter (105) is operative for providing the $m^{th}$ interpolated set of selected values as the $m^{th}$ set of filtered values.

3. Channel estimator according to claim 1 or 2, wherein the filter (105) is operative for providing $N_TD$ interpolated values between subsequent values in the therewith associated set of selected values, wherein the filter (105) associated with the $m^{th}$ set of selected values is operative for providing $N_TD$ interpolated values between subsequent values in the $m^{th}$ set of selected values.

4. Channel estimator according to any one of the preceding claims 1 to 3, wherein the filter (105) is an interpolation filter.

5. Channel estimator according to any one of the preceding claims 1 to 3, wherein the filter (105) is a Wiener interpolation filter.

6. Channel estimator according to any one of the preceding claims 1 to 6, wherein the selector (101) comprises $N_T$ outputs for providing $N_T$ sets of selected values, wherein a $m^{th}$ set of selected values is provided via a $m^{th}$ output, and wherein the channel estimator comprises $N_T$ filters coupled to $N_T$ outputs of the selector (101) for providing $N_T$ sets of filtered values, wherein the $m^{th}$ set of $N_T$ sets of filtered values comprises an estimate of a $m^{th}$ effective channel, the $m^{th}$ effective channel being an estimate of the effective channel at points associated with the $m^{th}$ set of filtered values.

7. Channel estimator in accordance with claim 6, wherein the $N_T$ filters are low-pass filters

8. Channel estimator according to any one of the preceding claims, wherein the selector (101) comprises an input for receiving the receive sequence and $N_T$ outputs for providing $N_T$ sets of selected values, wherein the $m^{th}$ set of selected values is provided via a $m^{th}$ output of the $N_T$ outputs.

9. Channel estimator according to claim 8 or 9, wherein the filter (105) is an interpolation filter for interpolating in time domain.

10. Channel estimator according to claim 8 or 9, comprising $N_T$ filters coupled to the $N_T$ outputs of the selector (101), wherein the $N_T$ filters (105) are interpolation filters for providing $N_T$ sets of interpolated values as $N_T$ sets of filtered values, wherein the $N_T$ filters (105) are operative for generating $N_T D$ interpolated values between subsequent pilot sequence values in the sets of values, wherein the $N_T$ sets of interpolated values comprise $N_T$ estimates of the effective channel impulse response.

11. Channel estimator according to claim 10, further comprising means for calculating the $N_T$ channel impulse responses from the $N_T$ estimates of the effective channel impulse response.

12. Channel estimator according to claim 11, wherein the means for calculating is operative for calculating the $N_T$ channel impulse responses from $N_T$ equations being determined by the $N_T$ estimates of the effective channel impulse response comprising a superposition of the $N_T$ channel impulse responses.

13. Channel estimator according to any one of claims 1 to 7, wherein the effective channel is a effective channel transfer function, wherein the receive sequence comprises a received version of a multi-carrier sequence, wherein subsequent values of the multi-carrier sequence are assigned to subsequent sub-carriers of a multi-carrier modulation scheme, wherein subsequent values of $N_T$ pilot sequences are assigned to every $D^{th}$ sub-carrier, wherein the selector (101) is operative for providing the $m^{th}$ set of selected values starting with the $m^{th}$ value being associated with a $m^{th}$ sub-carrier, and for selecting every $(DN_T)^{th}$ being associated with every $(DN_T)^{th}$ sub-carrier.

14. Channel estimator according to claim 13, wherein the receive sequence comprises a number of receive sequence values, wherein the selector (101) comprises the number of inputs and $N_T$ outputs for providing $N_T$ sets of selective values, wherein the $m^{th}$ set of selective values is provided via a $m^{th}$ output.

15. Channel estimator according to claim 14, comprising $N_T$ filters (105) coupled to $N_T$ outputs of the selector (101) for providing $N_T$ sets of filtered values, each set of filtered values comprising an estimate of the effective channel transfer function at frequency points determined by sub-carriers associated with the respective set of filtered values.

16. Channel estimator according to claim 14 or 15, wherein the $N_T$ filters (105) are interpolation filters for providing $N_T$ sets of interpolated values as $N_T$ sets of filtered values, wherein the $N_T$ filters are operative for generating $N_T D$ interpolated values between subsequent values in the sets of values, wherein the $N_T$ sets of interpolated values comprise $N_T$ estimates of the effective channel transfer function.

17. Channel estimator in accordance with claims 13 to 16, wherein the $N_T$ filters (105) are interpolation filters for interpolating in frequency direction, wherein the values of the $m^{th}$ set of selected values are associated with successive frequency points, wherein the $m^{th}$ filter is operative for providing the $m^{th}$ set of filtered values having intermediate values associated with intermediate frequency points between the successive frequency points.

18. Channel estimator in accordance with claims 13 to 17, wherein the $N_T$ filters are interpolation filters for interpolating in time direction, wherein the $m^{th}$ filter (105) is operative for interpolating between corresponding values of the $m^{th}$ set of selected values or the $m^{th}$ set of filtered values at a first time instant and values of the $m^{th}$ set of selected values or the $m^{th}$ set of filtered values at a second time instant to provide a $m^{th}$ set of selected values at an intermediate time instant between the first time instant and the second time instant.

19. Channel estimator in accordance with claims 13 to 18, wherein the $N_T$ filters (105) are interpolation filters for simultaneously interpolating in frequency direction and in time direction.

20. Channel estimator in accordance with claims 13 to 19, further comprising a composer for composing the estimates of the channel transfer function provided by the $N_T$ filters (105) at different frequency points to a composite effective channel transfer function.

**21.** Channel estimator in accordance with claim 20, wherein $N_T$=2 and wherein a first filter (105) is operative for providing an estimate of the channel transfer function at frequency points associated with odd-numbered sub-carriers and wherein a second filter (105) is operative for providing an estimate of the effective channel transfer function at frequency points associated with even-numbered sub-carriers, wherein the composer is operative for composing the composite effective channel transfer function by assigning values of the estimate of the effective channel transfer function at frequency points associated with odd-numbered sub-carriers to odd-numbered sub-carriers of the composite effective channel transfer function and by assigning values of the estimate of the effective channel transfer function at frequency points associated with even-numbered sub-carriers to even-numbered sub-carriers of the composite effective channel transfer function.

**22.** Method for estimating an effective channel from a receive sequence, the receive sequence including a superposition of $N_T$ pilot sequences being transmittable from $N_T$ transmitting points through $N_T$ communication channels to a receiving point, wherein $N_T$-1 pilot sequences are modulated versions of a first pilot sequence generated using a cyclic delay diversity transmission scheme, wherein the effective channel comprises a superposition of the $N_T$ channels extending from the $N_T$ transmitting points to the receiving point, the method comprising the following steps:

converting (201) a time-domain input signal into a spectral representation, the spectral representation being the receive sequence;
providing one or more sets of selected values, wherein a $m^{th}$ set of selected values of the one or more sets of selected values is provided by selecting every $(DN_T)^{th}$ value from a set of values comprised by the receive sequence starting with a $m^{th}$ value in the set of values, the mth value including pilot information,

wherein D denotes a pilot spacing; and filtering the $m^{th}$ set of selected values to provide a $m^{th}$ set of filtered values comprising an estimate of the effective channel at points associated with the $m^{th}$ set of filtered values.

**23.** Computer program having a program code for performing a method in accordance with claim 22, when the program runs on a computer.

**Patentansprüche**

**1.** Kanalschätzer zum Schätzen eines effektiven Kanals aus einer Empfangssequenz, wobei die Empfangssequenz eine Überlagerung von $N_T$ Pilotsequenzen umfasst, die von $N_T$ Sendepunkten durch $N_T$ Kommunikationskanäle zu einem Empfangspunkt gesendet werden können, wobei $N_T$-1 Pilotsequenzen modulierte Versionen einer ersten Pilotsequenz sind, die unter Verwendung eines Zyklische-Verzögerung-Diversitätssendeschemas erzeugt werden, wobei der effektive Kanal eine Überlagerung der $N_T$ Kanäle aufweist, die sich von den $N_T$ Sendepunkten zu dem Empfangspunkt erstreckt, wobei der Kanalschätzer folgende Merkmale aufweist:

einen Zeit-Frequenz-Wandler (201) zum Umwandeln eines Zeitbereichseingangssignals in eine Spektraldarstellung, wobei die Spektraldarstellung die Empfangssequenz ist;
einen Selektor (101) zum Liefern von einem oder mehreren Sätzen ausgewählter Werte, wobei der Selektor (101) wirksam ist zum Liefern eines m-ten Satzes von ausgewählten Werten des einen oder der mehreren Sätze aus ausgewählten Werten durch Auswählen jedes $(DN_T)$-ten Werts aus einem Satz von Werten, beinhaltet durch die Empfangssequenz, beginnend mit einem m-ten Wert in dem Satz aus Werten, wobei der m-te Wert Pilotinformationen umfasst, wobei D eine Pilotbeabstandung bezeichnet;
ein Filter (105) zum Filtern des m-ten Satzes aus ausgewählten Werten, um einen m-ten Satz aus gefilterten Werten zu liefern, der eine Schätzung des effektiven Kanals an Punkten aufweist, die dem m-ten Satz aus gefilterten Werten zugeordnet sind.

**2.** Kanalschätzer gemäß Anspruch 1, bei dem die Empfangssequenz eine Anzahl von aufeinanderfolgenden Empfangssequenzwerten aufweist, wobei jeder D-te Empfangssequenzwert Pilotinformationen aufweist, die durch Werte von $N_T$ Pilotsequenzen bestimmt sind, wobei das Filter (105) ein Interpolationsfilter ist zum Interpolieren zwischen aufeinanderfolgenden Werten in dem m-ten Satz aus ausgewählten Werten, der Pilotinformationen aufweist, zum Liefern eines m-ten interpolierten Satzes aus Werten, der interpolierte Werte zwischen aufeinanderfolgenden Werten des m-ten Satzes aus ausgewählten Werten aufweist, wobei das Filter (105) wirksam ist zum Liefern des m-ten interpolierten Satzes aus ausgewählten Werten als den m-ten Satz aus gefilterten Werten.

3. Kanalschätzer gemäß Anspruch 1 oder 2, bei dem das Filter (105) wirksam ist zum Liefern von $N_T D$ interpolierten Werten zwischen aufeinanderfolgenden Werten in dem dazu zugeordneten Satz aus ausgewählten Werten, wobei das Filter (105), das dem m-ten Satz aus ausgewählten Werten zugeordnet ist, wirksam ist zum Liefern von $N_T D$ interpolierten Werten zwischen aufeinanderfolgenden Werten in dem m-ten Satz aus ausgewählten Werten.

4. Kanalschätzer gemäß einem der vorhergehenden Ansprüche 1 bis 3, bei dem das Filter (105) ein Interpolationsfilter ist.

5. Kanalschätzer gemäß einem der vorhergehenden Ansprüche 1 bis 3, bei dem das Filter (105) ein Wiener-Interpolationsfilter ist.

6. Kanalschätzer gemäß einem der vorhergehenden Ansprüche 1 bis 6, bei dem der Selektor (101) $N_T$ Ausgänge aufweist zum Liefern von $N_T$ Sätzen aus ausgewählten Werten, wobei ein m-ter Satz aus ausgewählten Werten über einen m-ten Ausgang geliefert wird, und wobei der Kanalschätzer $N_T$ Filter aufweist, die mit $N_T$ Ausgängen des Selektors (101) gekoppelt sind, zum Liefern von $N_T$ Sätzen aus gefilterten Werten, wobei der m-te Satz aus $N_T$ Sätzen aus gefilterten Werten eine Schätzung eines m-ten effektiven Kanals aufweist, wobei der m-te effektive Kanal eine Schätzung des effektiven Kanals an Punkten ist, die dem m-ten Satz aus gefilterten Werten zugeordnet sind.

7. Kanalschätzer gemäß Anspruch 6, bei dem die $N_T$ Filter Tiefpassfilter sind.

8. Kanalschätzer gemäß einem der vorhergehenden Ansprüche, bei dem der Selektor (101) einen Eingang zum Empfangen der Empfangssequenz und $N_T$ Ausgänge zum Liefern von $N_T$ Sätzen aus ausgewählten Werten aufweist, wobei der m-te Satz aus ausgewählten Werten über einen m-ten Ausgang der $N_T$ Ausgänge geliefert wird.

9. Kanalschätzer gemäß Anspruch 8 oder 9, bei dem das Filter (105) ein Interpolationsfilter zum Interpolieren in dem Zeitbereich ist.

10. Kanalschätzer gemäß Anspruch 8 oder 9, der $N_T$ Filter aufweist, die mit den $N_T$ Ausgängen des Selektors (101) gekoppelt sind, wobei die $N_T$ Filter (105) Interpolationsfilter sind zum Liefern von $N_T$ Sätzen aus interpolierten Werten als $N_T$ Sätze aus gefilterten Werten, wobei die $N_T$ Filter (105) wirksam sind zum Erzeugen von $N_T D$ interpolierten Werten zwischen aufeinanderfolgenden Pilotsequenzwerten in dem Satz aus Werten, wobei die $N_T$ Sätze aus interpolierten Werten $N_T$ Schätzungen der Effektiver-Kanal-Impulsantwort aufweisen.

11. Kanalschätzer gemäß Anspruch 10, der ferner eine Einrichtung aufweist zum Berechnen der $N_T$ Kanal-Impulsantworten aus den $N_T$ Schätzungen der Effektiver-Kanal-Impulsantwort.

12. Kanalschätzer gemäß Anspruch 11, bei dem die Einrichtung zum Berechnen wirksam ist zum Berechnen der $N_T$ Kanal-Impulsantworten aus $N_T$ Gleichungen, bestimmt durch die $N_T$ Schätzungen der Effektiver-Kanal-Impulsantwort, die eine Überlagerung der $N_T$ Kanal-Impulsantworten aufweist.

13. Kanalschätzer gemäß einem der Ansprüche 1 bis 7, bei dem der effektive Kanal eine Effektiver-Kanal-Übertragungsfunktion ist, wobei die Empfangssequenz eine Empfangsversion einer Mehrträgersequenz aufweist, wobei aufeinanderfolgende Werte der Mehrträgersequenz aufeinanderfolgenden Teilträgern eines Mehrträgermodulationsschemas zugewiesen sind, wobei aufeinanderfolgende Werte von $N_T$ Pilotsequenzen jedem D-ten Teilträger zugewiesen sind, wobei der Selektor (101) wirksam ist zum Liefern des m-ten Satzes aus ausgewählten Werten beginnend mit dem m-ten Wert, der einem m-ten Teilträger zugeordnet ist, und zum Auswählen jedes $(DN_T)$-ten Werts, der jedem $(DN_T)$-ten Teilträger zugeordnet ist.

14. Kanalschätzer gemäß Anspruch 13, bei dem die Empfangssequenz eine Anzahl von Empfangssequenzwerten aufweist, wobei der Selektor (101) die Anzahl von Eingängen und $N_T$ Ausgänge aufweist zum Liefern von $N_T$ Sätzen aus selektiven Werten, wobei der m-te Satz aus selektiven Werten über einen m-ten Ausgang geliefert wird.

15. Kanalschätzer gemäß Anspruch 14, der $N_T$ Filter (105) aufweist, die mit $N_T$ Ausgängen des Selektors (101) gekoppelt sind, zum Liefern von $N_T$ Sätzen aus gefilterten Werten, wobei jeder Satz aus gefilterten Werten eine Schätzung der Effektiver-Kanal-Übertragungsfunktion an Frequenzpunkten aufweist, die durch Teilträger bestimmt sind, die dem jeweiligen Satz aus gefilterten Werten zugeordnet sind.

**16.** Kanalschätzer gemäß Anspruch 14 oder 15, bei dem die $N_T$ Filter (105) Interpolationsfilter sind zum Liefern von $N_T$ Sätzen aus interpolierten Werten als $N_T$ Sätze aus gefilterten Werten, wobei die $N_T$ Filter wirksam sind zum Erzeugen von $N_T D$ interpolierten Werten zwischen aufeinanderfolgenden Werten in den Sätzen aus Werten, wobei die $N_T$ Sätze aus interpolierten Werten $N_T$ Schätzungen der Effektiver-Kanal-Übertragungsfunktion aufweisen.

**17.** Kanalschätzer gemäß einem der Ansprüche 13 bis 16, bei dem die $N_T$ Filter (105) Interpolationsfilter sind zum Interpolieren in der Frequenzrichtung, wobei die Werte des m-ten Satzes aus ausgewählten Werten aufeinanderaufeinanderfolgenden Frequenzpunkten zugeordnet sind, wobei das m-te Filter wirksam ist zum Liefern des m-ten Satzes aus gefilterten Werten mit Zwischenwerten, die Zwischenfrequenzpunkten zwischen den aufeinanderfolgenden Frequenzpunkten zugeordnet sind.

**18.** Kanalschätzer gemäß einem der Ansprüche 13 bis 17, bei dem die $N_T$ Filter Interpolationsfilter sind zum Interpolieren in der Zeitrichtung, wobei das m-te Filter (105) wirksam ist zum Interpolieren zwischen entsprechenden Werten des m-ten Satzes aus ausgewählten Werten oder des m-ten Satzes aus gefilterten Werten zu einem ersten Zeitpunkt und Werten des m-ten Satzes aus ausgewählten Werten oder des m-ten Satzes aus gefilterten Werten zu einem zweiten Zeitpunkt, um einen m-ten Satz aus ausgewählten Werten zu einem Zwischenzeitpunkt zwischen dem ersten Zeitpunkt und dem zweiten Zeitpunkt zu liefern.

**19.** Kanalschätzer gemäß einem der Ansprüche 13 bis 18, bei dem die $N_T$ Filter (105) Interpolationsfilter sind zum gleichzeitigen Interpolieren in Frequenzrichtung und in Zeitrichtung.

**20.** Kanalschätzer gemäß einem der Ansprüche 13 bis 19, der ferner einen Zusammensetzer aufweist zum Zusammensetzen der Schätzungen der Kanalübertragungsfunktion, die durch die $N_T$ Filter (105) zu unterschiedlichen Zeitpunkten zu einer zusammengesetzten Effektiver-Kanal-Übertragungsfunktion geliefert werden.

**21.** Kanalschätzer gemäß Anspruch 20, bei dem $N_T = 2$ und bei dem ein erstes Filter (105) wirksam ist zum Liefern einer Schätzung der Kanalübertragungsfunktion an Frequenzpunkten, die ungerade nummerierten Teilträgern zugeordnet sind, und bei dem ein zweites Filter (105) wirksam ist zum Liefern einer Schätzung der Effektiver-Kanal-Übertragungsfunktion an Frequenzpunkten, die gerade nummerierten Teilträgern zugeordnet sind, wobei der Zusammensetzer wirksam ist zum Zusammensetzen der zusammengesetzten Effektiver-Kanal-Übertragungsfunktion durch Zuweisen von Werten der Schätzung der Effektiver-Kanal-Übertragungsfunktion an Frequenzpunkten, die ungerade nummerierten Teilträgern zugeordnet sind, zu ungerade nummerierten Teilträgern der zusammengesetzten Effektiver-Kanal-Übertragungsfunktion, und durch Zuweisen von Werten der Schätzung der Effektiver-Kanal-Übertragungsfunktion an Frequenzpunkten, die gerade nummerierten Teilträgern zugeordnet sind, zu gerade nummerierten Teilträgern der zusammengesetzten Effektiver-Kanal-Übertragungsfunktion.

**22.** Verfahren zum Schätzen eines effektiven Kanals aus einer Empfangssequenz, wobei die Empfangssequenz eine Überlagerung von $N_T$ Pilotsequenzen umfasst, die von $N_T$ Sendepunkten durch $N_T$ Kommunikationskanäle zu einem Empfangspunkt gesendet werden können, wobei $N_T$-1 Pilotsequenzen modulierte Versionen einer ersten Pilotsequenz sind, erzeugt unter Verwendung eines Zyklische-Verzögerung-Diversitätsübertragungsschemas, wobei der effektive Kanal eine Überlagerung der $N_T$ Kanäle aufweist, die sich von den $N_T$ Sendepunkten zu dem Empfangspunkt erstreckt, wobei das Verfahren folgende Schritte aufweist:

Umwandeln eines Zeitbereichseingangssignals in eine Spektraldarstellung, wobei die Spektraldarstellung die Empfangssequenz ist;
Liefern von einem oder mehreren Sätzen von ausgewählten Werten, wobei ein m-ter Satzes von ausgewählten Werten des einen oder der mehreren Sätze aus ausgewählten Werten geliefert wird durch Auswählen jedes $(DN_T)$-ten Werts aus einem Satz von Werten, beinhaltet durch die Empfangssequenz, beginnend mit einem m-ten Wert in dem Satz aus Werten, wobei der m-te Wert Pilotinformationen umfasst, wobei D eine Pilotbeabstandung bezeichnet; und
Filtern des m-ten Satzes aus ausgewählten Werten, um einen m-ten Satz aus gefilterten Werten zu liefern, der eine Schätzung des effektiven Kanals an Punkten aufweist, die dem m-ten Satz aus gefilterten Werten zugeordnet sind.

**23.** Computerprogramm, das einen Programmcode zum Ausführen eines Verfahrens gemäß Anspruch 22 aufweist, wenn das Programm auf einem Computer läuft.

**Revendications**

1. Estimateur de canal destiné à estimer un canal effectif à partir d'une séquence de réception, la séquence de réception comportant une superposition de $N_T$ séquences pilotes pouvant être transmises de $N_T$ points de transmission, par l'intermédiaire de $N_T$ canaux de communication, à un point de réception, dans lequel $N_T$-1 séquences pilotes sont des versions modulées d'une première séquence pilote générée à l'aide d'un schéma de transmission de diversité à temporisation cyclique, dans lequel le canal effectif comprend une superposition des $N_T$ canaux s'étendant des $N_T$ points de transmission au point de réception, l'estimateur de canal comprenant:

   un convertisseur temps - fréquence (201) destiné à convertir un signal d'entrée dans le domaine du temps en une représentation spectrale, la représentation spectrale étant la séquence de réception;
   un sélecteur (101) destiné à fournir un ou plusieurs ensembles de valeurs sélectionnées, où le sélecteur (101) est opérationnel pour fournir un m-ième ensemble de valeurs sélectionnées parmi l'un ou plusieurs ensembles de valeurs sélectionnées en sélectionnant chaque $(DN_T)$-ième valeur d'un ensemble de valeurs compris dans la séquence de réception en commençant par une m-ième valeur dans l'ensemble de valeurs, la m-ième valeur comportant des informations pilotes, où D désigne un espacement pilote;
   un filtre (105) destiné à filtrer le m-ième ensemble de valeurs sélectionnées, pour fournir un m-ième ensemble de valeurs filtrées comprenant une estimation du canal effectif à des points associés avec le m-ième ensemble de valeurs filtrées.

2. Estimateur de canal selon la revendication 1, dans lequel la séquence de réception comprend un nombre de valeurs de séquence de réception successives, dans lequel chaque D-ième valeur de séquence de réception comprend des informations pilotes déterminées par les valeurs de $N_T$ séquences pilotes, dans lequel le filtre (105) est un filtre d'interpolation destiné à interpoler entre les valeurs successives dans le m-ième ensemble de valeurs sélectionnées comprenant des informations pilotes, pour fournir un m-ième ensemble de valeurs interpolé comprenant des valeurs interpolées entre des valeurs successives du m-ième ensemble de valeurs sélectionnées, dans lequel le filtre (105) est opérationnel pour fournir le m-ième ensemble interpolé de valeurs sélectionnées comme m-ième ensemble de valeurs filtrées.

3. Estimateur de canal selon la revendication 1 ou 2, dans lequel le filtre (105) est opérationnel pour fournir $N_TD$ valeurs interpolées entre des valeurs successives dans l'ensemble de valeurs sélectionnées y associé, dans lequel le filtre (105) associé au m-ième ensemble de valeurs sélectionnées est opérationnel pour fournir $N_TD$ valeurs interpolées entre des valeurs successives dans le m-ième ensemble de valeurs sélectionnées.

4. Estimateur de canal selon l'une quelconque des revendications 1 à 3 précédentes, dans lequel le filtre (105) est un filtre d'interpolation.

5. Estimateur de canal selon l'une quelconque des revendications 1 à 3 précédentes, dans lequel le filtre (105) est un filtre d'interpolation de Wiener.

6. Estimateur de canal selon l'une quelconque des revendications 1 à 6 précédentes, dans lequel le sélecteur (101) comprend $N_T$ sorties pour fournir $N_T$ ensembles de valeurs sélectionnées, dans lequel un m-ième ensemble de valeurs sélectionnées est fourni via une m-ième sortie, et dans lequel l'estimateur de canal comprend $N_T$ filtres couplés à $N_T$ sorties du sélecteur (101) pour fournir $N_T$ ensembles de valeurs filtrées, dans lequel le m-ième ensemble parmi les $N_T$ ensembles de valeurs filtrées comprend une estimation d'un m-ième canal effectif, le m-ième canal effectif étant une estimation du canal effectif aux points associés avec le m-ième ensemble de valeurs filtrées.

7. Estimateur de canal selon la revendication 6, dans lequel les $N_T$ filtres sont des filtres passe-bas.

8. Estimateur de canal selon l'une quelconque des revendications précédentes, dans lequel le sélecteur (101) comprend une entrée destinée à recevoir la séquence de réception et $N_T$ sorties destinées à fournir $N_T$ ensembles de valeurs sélectionnées, dans lequel le m-ième ensemble de valeurs sélectionnées est fournir via une m-ième sortie parmi les $N_T$ sorties.

9. Estimateur de canal selon la revendication 8 ou 9, dans lequel le filtre (105) est un filtre d'interpolation destiné à interpoler dans le domaine du temps.

10. Estimateur de canal selon la revendication 8 ou 9, comprenant $N_T$ filtres couplés aux $N_T$ sorties du sélecteur (101), dans lequel les $N_T$ filtres (105) sont des filtres d'interpolation destinés à fournir $N_T$ ensembles de valeurs interpolées comme $N_T$ ensembles de valeurs filtrées, dans lequel les $N_T$ filtres (105) sont opérationnels pour générer $N_TD$ valeurs interpolées entre des valeurs de séquence pilote successives dans les ensembles de valeurs, dans lequel les $N_T$ ensembles de valeurs interpolées comprennent $N_T$ estimations de la réponse impulsionnelle du canal effectif.

**11.** Estimateur de canal selon la revendication 10, comprenant par ailleurs un moyen pour calculer les $N_T$ réponses impulsionnelles de canal à partir des $N_T$ estimations de la réponse impulsionnelle du canal effectif.

**12.** Estimateur de canal selon la revendication 11, dans lequel le moyen pour calculer est opérationnel pour calculer les $N_T$ réponses impulsionnelles de canal à partir de $N_T$ équations déterminées par les $N_T$ estimations de la réponse impulsionnelle du canal effectif comprenant une superposition des $N_T$ réponses impulsionnelles de canal.

**13.** Estimateur de canal selon l'une quelconque des revendications 1 à 7, dans lequel le canal effectif est une fonction de transfert de canal effectif, dans lequel la séquence de réception comprend une version reçue d'une séquence de porteuses multiples, dans lequel des valeurs successives de la séquence de porteuses multiples sont attribuées à des sous-porteuses successives d'un schéma de modulation de porteuses multiples, dans lequel des valeurs successives de $N_T$ séquences pilotes sont attribuées à chaque $D$-ième sous-porteuse, dans lequel le sélecteur (101) est opérationnel pour fournir le $m$-ième ensemble de valeurs sélectionnées en commençant par la $m$-ième valeur associée à une $m$-ième sous-porteuse, et pour sélectionner chaque $(DN_T)$-ième associée à chaque $(DN_T)$-ième sous-porteuse.

**14.** Estimateur de canal selon la revendication 13, dans lequel la séquence de réception comprend un nombre de valeurs de séquence de réception, dans lequel le sélecteur (101) comprend le nombre d'entrées et $N_T$ sorties pour fournir $N_T$ ensembles de valeurs sélectives, dans lequel le $m$-ième ensemble de valeurs sélectives est fourni via une $m$-ième sortie.

**15.** Estimateur de canal selon la revendication 14, comprenant $N_T$ filtres (105) couplés à $N_T$ sorties du sélecteur (101) pour fournir $N_T$ ensembles de valeurs filtrées, chaque ensemble de valeurs filtrées comprenant une estimation de la fonction de transfert de canal effectif à des points de fréquence déterminés par les sous-porteuses associées à l'ensemble de valeurs filtrées respectif.

**16.** Estimateur de canal selon la revendication 14 ou 15, dans lequel les $N_T$ filtres (105) sont des filtres d'interpolation destinés à fournir $N_T$ ensembles de valeurs interpolées comme $N_T$ ensembles de valeurs filtrées, dans lequel les $N_T$ filtres sont opérationnels pour générer $N_TD$ valeurs interpolées entre des valeurs successives dans les ensembles de valeurs, dans lequel les $N_T$ ensembles de valeurs interpolées comprennent $N_T$ estimations de fonction de transfert de canal effectif.

**17.** Estimateur de canal selon les revendications 13 à 16, dans lequel les $N_T$ filtres (105) sont des filtres d'interpolation destinés à interpoler dans la direction de la fréquence, dans lequel les valeurs du $m$-ième ensemble de valeurs sélectionnées sont associées à des points de fréquence successifs, dans lequel le $m$-ième filtre est opérationnel pour fournir le $m$-ième ensemble de valeurs filtrées ayant des valeurs intermédiaires associées à des points de fréquence intermédiaires entre les points de fréquence successifs.

**18.** Estimateur de canal selon les revendications 13 à 17, dans lequel les $N_T$ filtres sont des filtres d'interpolation destinés à interpoler dans la direction du temps, dans lequel le $m$-ième filtre (105) est opérationnel pour interpoler entre des valeurs correspondantes du $m$-ième ensemble de valeurs sélectionnées ou le $m$-ième ensemble de valeurs filtrées à un premier moment et des valeurs du $m$-ième ensemble de valeurs sélectionnées ou le $m$-ième ensemble de valeurs filtrées à un deuxième moment, pour fournir un $m$-ième ensemble de valeurs sélectionnées à un moment intermédiaire entre le premier moment et le deuxième moment.

**19.** Estimateur de canal selon les revendications 13 à 18, dans lequel les $N_T$ filtres (105) sont des filtres d'interpolation destinés à interpoler simultanément dans la direction de la fréquence et dans la direction du temps.

**20.** Estimateur de canal selon les revendications 13 à 19, comprenant, par ailleurs, un composeur destiné à composer les estimations de la fonction de transfert de canal fournies par les $N_T$ filtres (105) à différents points de fréquence à une fonction de transfert de canal effectif composite.

**21.** Estimateur de canal selon la revendication 20, dans lequel $N_T=2$ et dans lequel un premier filtre (105) est opérationnel pour fournir une estimation de la fonction de transfert de canal à des points de fréquence associés à des sous-porteuses de nombre impair et dans lequel un deuxième filtre (105) est opérationnel pour fournir une estimation de la fonction de transfert de canal effectif à des points de fréquence associés avec des sous-porteuses de nombre pair, dans lequel le composeur est opérationnel pour composer la fonction de transfert de canal effectif composite en attribuant des valeurs de l'estimation de la fonction de transfert de canal effectif à des points de fréquence associés à des sous-porteuses de nombre impair à des sous-porteuses de nombre impair de la fonction de transfert de canal effectif composite et en attribuant des valeurs de l'estimation de la fonction de transfert de canal effectif à des points de fréquence associés avec des sous-porteuses de nombre pair à des sous-porteuses de nombre pair de la fonction de transfert de canal effectif composite.

22. Procéder pour estimer un canal effectif à partir d'une séquence de réception, la séquence de réception comportant une superposition de $N_T$ séquences pilotes pouvant être transmises de $N_T$ points de transmission, par l'intermédiaire de $N_T$ canaux de communication, à un point de réception, dans lequel $N_T$-1 séquences pilotes sont des versions modulées d'une première séquence pilote générée à l'aide d'un schéma de transmission de diversité de temporisation cyclique, dans lequel le canal effectif comprend une superposition des $N_T$ canaux s'étendant des $N_T$ points de transmission au point de réception, le procédé comprenant les étapes suivantes:

   convertir (201) un signal d'entrée dans le domaine du temps en une représentation spectrale, la représentation spectrale étant la séquence de réception;
   fournir un ou plusieurs ensembles de valeurs sélectionnées, dans lequel un m-ième ensemble de valeurs sélectionnées de l'un ou plusieurs ensembles de valeurs sélectionnées est fourni en sélectionnant chaque $(DN_T)$-ième valeur d'un ensemble de valeurs compris dans la séquence de réception en commençant par une m-ième valeur dans l'ensemble de valeurs, la m-ième valeur comportant des informations pilotes, où D désigne un espacement pilote; et
   filtrer le m-ième ensemble de valeurs sélectionnées pour fournir un m-ième ensemble de valeurs filtrées comprenant une estimation du canal effectif à des points associés avec le m-ième ensemble de valeurs filtrées.

23. Programme d'ordinateur pour réaliser un procédé selon la revendication 22 lorsque le programme est exécuté sur un ordinateur.

FIG 1

$N_T$ sets of selected values

Estimate of the effective channel

105

Receive signal

selector

Filter

105

Filter

105

Filter

101

$m^{th}$ set of selected values

105

EP 1 716 679 B1

38

FIG 2

Time-domain signal

Time-frequency converter — 201

Receive sequence

selector — 101

$N_T$ sets of selected values

m-th set of selected values

Filter — 105

Filter — 105

Filter — 105

Estimate of an effective channel transfer function

# FIG 3

Figure 7: *Effective channel impulse response (CIR) if the CDD_OFDM system.*

FIG 4A

FIG 4B

FIG 4C

## FIG 5

subcarrier index i

time l

| | |
|---|---|
| ▨ | Pilot |
| ▨ | i even |
| ☐ | i odd |

## FIG 6

subcarrier index i

$D_f$

$D_0$

time l

| | |
|---|---|
| ▨ | Pilot |
| ▨ | i even |
| ☐ | i odd |

Figure 7: *Possible pilot grid structure with even $D_f$ for CDD-OFDM with 2 transmit antennas. Even and odd subcarriers are drawn in grey and white.*

# FIG 7

# FIG 8

FIG 9

Asigned sequence

909

Origin pilot sequence [X(1), X(2), X(3)]

903

Information sequence [I(1), I(2), I(3), I(4), I(5)]

905

901

Assigner

I (1)
X (1)
I (2)
I (3)
X (2)
I (4)
I (5)
X (3)

Frequency-time converter

907

911

916

913    914

915

$\delta_{cyc}$

$\mu$-th pilotsequence

44

EP 1 716 679 B1

# FIG 10

OFDM modulation

$X_{l,i}$ → S/P $N_C$ → IFFT → +GI (−$N_{GI}$, $N_{FFT}$) → P/S → $x_{l,i}$

1101  1105  1107
1103

Insert guard interval

OFDM demodulation

$y_{l,n}$ → S/P → −GI (−$N_{GI}$, $N_{FFT}$) → FFT → P/S $N_C$ → $Y_{l,i}$

1115
1109  1111  1113

Remove guard interval

# FIG 11

generate 2D-Pilot

1201

$X_{l,i}^{(1)}$ → MUX Pilot → OFDM Mod → $x_{l,n}^{(1)}$

$X_{l,i}^{(N_T)}$ → MUX Pilot → OFDM Mod → $x_{l,i}^{(N_T)}$

1203  1205

1209  1207  $y_{l,n}$

1215

OFDM Demod → DMUX Pilot → det → $\hat{X}_{l,i}^{(\mu)}$

Channel estimation

$Y_{l,i}$  $\hat{H}_{l,i}^{(\mu)}$  $Y_{l,i}^{(1)}$

1211  1213  1217

# FIG 12

# FIG 13

## FIG 14

# FIG 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 200270118771 A1
- US 20030043887 A1

- US 20020101825 A1

### Non-patent literature cited in the description

- **A. DAMMANN ; S. KAISER.** Standard Comformable Antenna Diversity Techniques for OFDM and its Application to the DVB-T System. *Proc. IEEE Global Telecommunication Conference,* November 2001, 3100-3105
- **S. ABETA ; H. ATARASHI ; M. SAWAHASHI.** Performance of Coherent Multi-Carrier/DS-CDMA and MC-CDMA for Broadband Packet Wireless Access. *IEICE Transactions on Communications,* March 2001, vol. E84-B, 406-414
- **H. ATARASHI ; M. SAWAHASHI.** Variable Spreading Factor Orthogonal Frequency and Code Division Multiplexing (VSF-OFCDM. *3rd International Workshop on Multi-Carrier Spread, Spectrum, & Related Topics (MC-SS 2001,* September 2001
- **A. NAGUIB ; N. SESHADRI ; A. CALDERBANK.** Space Time Coding and Signal Processing for High Data Rate Wireless Communication. *IEEE Signal Processing Magazine,* May 2000, 76-92
- **A. WITTNEBEN.** A New Bandwidth Efficient Transmit Antenna Modulation Diversity Scheme for Linear Digital Modulation. *Proc. IEEE Int. Conference on Communications (ICC' 93,* May 1993, 1630-1634
- Parameter Optimization, Interleaving and Multiple Access in OFDM with Cyclic Delay Diversity. **G. BAUCH ; J. S. MALIK.** Vehicular Technology Conference. VTC-spring, April 2004

- **A. DAMMANN ; S. KAISER.** Standard Conformable Antenna Diversity Techniques for OFDM and its Application to the DVB-T System. *Proc. IEEE Global Telecommunications Conference (GLOBECOM 2001,* November 2001, 3100-3105
- **S. KANG ; J. S. LEHNERT.** Channel Estimation For OFDM Systems With Transmitter Diversity For A Quasi-Static Fading Channel. *Proceedings IEEE Military Communications Conference MILCOM 2003,* 13 October 2003, 309-313
- **W.C. JAKE.S.** Microwave Mobile Communications. Wiley, 1974
- **R. NILSSON ; O. EDFORS ; M. SANDELL ; P. BÖRJESSON.** An Analysis of Two-Dimensional Pilot-Symbol Assisted Modulation for OFDM. *Proc. IEEE Intern. Conf. On Personal Wireless Communications (ICPWC '97,* 1997, 71-74
- **P. HÖHER ; S. KAISER ; P. ROBERTSON.** Pilot-Symbol-Aided Channel Estimation in Time and Frequency. *Proc. Communication Theory Mini-Conference (CTMC) within IEEE Global Telecommunications Conference (GLOBECOM '97,* 1997, 90-96
- **Y. LI ; N. SESHADRI ; S. ARIYAVISITAKUL.** Channel Estimation for OFDM Systems with Transmitter Diversity in Mobile Wireless Channels. *IEEE Journal of Selected Areas on Communications,* March 1999, vol. 17, 461-470